(19) Europäisches Patentamt
European Patent Office
Office européen des brevets

(11) **EP 4 598 087 A1**

(12) **EUROPEAN PATENT APPLICATION**
published in accordance with Art. 153(4) EPC

(43) Date of publication:
06.08.2025 Bulletin 2025/32

(21) Application number: 22960387.3

(22) Date of filing: 30.09.2022

(51) International Patent Classification (IPC):
*H04W 16/28* (2009.01)   *H04W 72/02* (2009.01)

(52) Cooperative Patent Classification (CPC):
H04W 16/28; H04W 72/02

(86) International application number:
PCT/CN2022/123512

(87) International publication number:
WO 2024/065774 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **GUANGDONG OPPO MOBILE
TELECOMMUNICATIONS
CORP., LTD.
Dongguan, Guangdong 523860 (CN)**

(72) Inventor: **LIU, Wendong
Dongguan, Guangdong 523860 (CN)**

(74) Representative: **RGTH
Patentanwälte PartGmbB
Neuer Wall 10
20354 Hamburg (DE)**

(54) **METHOD FOR BEAM MANAGEMENT, AND TERMINAL DEVICE AND NETWORK DEVICE**

(57)   Provided are a method for beam management, and a terminal device and a network device. The method comprises: a terminal device determining the state of a first model, wherein the first model is used for performing beam prediction on a target beam set, and the state of the first model comprises one or more of an active state, an inactive state and a monitoring state; and the monitoring state is used for determining a monitoring result of the first model, and the monitoring result is used for indicating the accuracy of a prediction result of the first model. **In** the embodiments of the present application, the first model can be managed on the basis of the state of the first model, for example, the accuracy of the prediction result of the first model is monitored in the monitoring state, which is conducive to improving the success rate of communication between the terminal device and a network device. Thus, the problem in a traditional solution whereby a prediction result output by a first model is always used to determine a beam used for communication between a terminal device and a network device, such that the communication between the terminal device and the network device cannot be performed when the prediction result of the first model is inaccurate is avoided.

A terminal device determines a
state of an AI model — S1210

FIG. 12

EP 4 598 087 A1

## Description

## TECHNICAL FIELD

This application relates to the field of communications technologies, and more specifically, to a beam management method, a terminal device, and a network device.

## BACKGROUND

Currently, although a beam management method based on an artificial intelligence (artificial intelligence, AI) model is discussed and studied, how to monitor and manage a running state of the AI model is not discussed yet. Therefore, the following problem may exist: a target beam in a prediction result output by the AI model is not a true optimal choice. However, a terminal device and a network device still use the prediction result. When link quality corresponding to the target beam is extremely poor, communication may fail to be performed based on the target beam.

## SUMMARY

This application provides a beam management method, a terminal device, and a network device. The following describes the aspects involved in this application.

According to a first aspect, a beam management method is provided, including: determining, by a terminal device, a state of a first model, where the first model is used to perform beam prediction for a target beam set, and the state of the first model includes one or more of an active state, an inactive state, or a monitoring state, where the monitoring state is used to determine a monitoring result of the first model, and the monitoring result is used to indicate accuracy of a prediction result of the first model.

According to a second aspect, a beam management method is provided, including: determining, by a network device, a state of a first model, where the first model is used to perform beam prediction for a target beam set, and the state of the first model includes one or more of an active state, an inactive state, or a monitoring state, where the monitoring state is used to determine a monitoring result of the first model, and the monitoring result is used to indicate accuracy of a prediction result of the first model.

According to a third aspect, a terminal device is provided, including: a processing unit, configured to determine a state of a first model, where the first model is used to perform beam prediction for a target beam set, and the state of the first model includes one or more of an active state, an inactive state, or a monitoring state, where the monitoring state is used to determine a monitoring result of the first model, and the monitoring result is used to indicate accuracy of a prediction result of the first model.

According to a fourth aspect, a network device is provided, including: a processing unit, configured to determine a state of a first model, where the first model is used to perform beam prediction for a target beam set, and the state of the first model includes one or more of an active state, an inactive state, or a monitoring state, where the monitoring state is used to determine a monitoring result of the first model, and the monitoring result is used to indicate accuracy of a prediction result of the first model.

According to a fifth aspect, a terminal device is provided, including a processor, a memory, and a communications interface. The memory is configured to store one or more computer programs. The processor is configured to invoke the computer program in the memory, to cause the terminal device to execute some or all of the steps in the method according to the first aspect.

According to a sixth aspect, a network device is provided, including a processor, a memory, and a communications interface. The memory is configured to store one or more computer programs. The processor is configured to invoke the computer program in the memory, to cause the network device to execute some or all of the steps in the method according to the second aspect.

According to a seventh aspect, an embodiment of this application provides a communications system, where the system includes the foregoing terminal device and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program. The computer program causes a communications device (for example, a terminal device or a network device) to execute some or all of the steps in the method according to each of the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a network device) to execute some or all of the steps in the method according to each of the foregoing aspects. In some implementations, the computer program product may be a software installation package.

According to a tenth aspect, an embodiment of this application provides a chip, where the chip includes a memory and a processor, the processor may invoke a computer program from the memory and run the computer program, to implement some or all of the steps in the method according to each of the foregoing aspects.

In embodiments of this application, a first model may be managed based on a state of the first model. For example, accuracy of a prediction result of the first model is monitored in a monitoring state, which is conductive to improving a success rate of communication between a terminal device and a network device. Therefore, the following problem in a conventional solution is avoided: since the prediction result output by the first model is always used to determine a beam used for communication between the terminal device and the network device, the communication between the terminal device and the network device cannot be performed when the prediction result of the first model is inaccurate.

**BRIEF DESCRIPTION OF DRAWINGS**

FIG. 1 shows a wireless communications system 100 to which embodiments of this application are applied.
FIG. 2 is a schematic diagram of a multi-beam system to which an embodiment of this application is applicable.
FIG. 3 is a schematic diagram of a multi-beam system to which another embodiment of this application is applicable.
FIG. 4 is a schematic diagram of a basic procedure of downlink beam selection to which an embodiment of this application is applicable.
FIG. 5 is a schematic diagram of a basic procedure of downlink beam selection to which another embodiment of this application is applicable.
FIG. 6 is a schematic diagram of a basic procedure of downlink beam selection to which still another embodiment of this application is applicable.
FIG. 7 is a schematic diagram of a neuron to which an embodiment of this application is applicable.
FIG. 8 is a schematic diagram of a neural network to which an embodiment of this application is applicable.
FIG. 9 is a schematic diagram of a convolutional neural network to which an embodiment of this application is applicable.
FIG. 10 is a schematic diagram of a recurrent neural network to which an embodiment of this application is applicable.
FIG. 11 is a schematic diagram of a long short-term memory model to which an embodiment of this application is applicable.
FIG. 12 is a schematic flowchart of a beam management method according to an embodiment of this application.
FIG. 13 is a schematic diagram of periodically entering a monitoring state according to an embodiment of this application.
FIG. 14 is a schematic diagram of periodically entering a monitoring state according to another embodiment of this application.
FIG. 15 is a schematic diagram of periodically entering a monitoring state according to still another embodiment of this application.
FIG. 16 is a schematic diagram of aperiodically entering a monitoring state according to an embodiment of this application.
FIG. 17 is a schematic diagram of aperiodically entering a monitoring state according to another embodiment of this application.
FIG. 18 is a schematic diagram of aperiodically entering a monitoring state according to still another embodiment of this application.
FIG. 19 is a schematic diagram of aperiodically entering a monitoring state according to yet another embodiment of this application.
FIG. 20 is a schematic diagram of a terminal device according to an embodiment of this application.
FIG. 21 is a schematic diagram of a network device according to an embodiment of this application.
FIG. 22 is a schematic structural diagram of a communications apparatus according to an embodiment of this application.

**DESCRIPTION OF EMBODIMENTS**

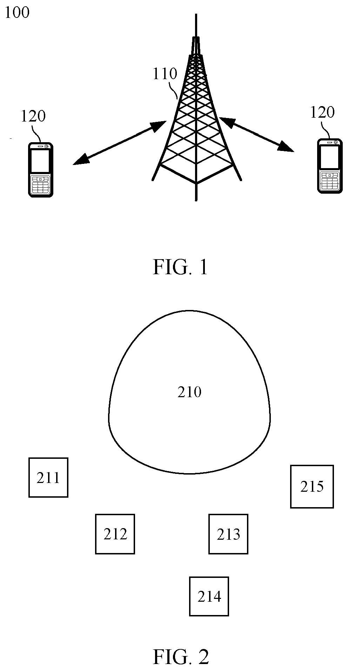

The following describes the technical solutions in this application with reference to the accompanying drawings. For ease of understanding, the following first describes, with reference to FIG. 1 to FIG. 11, a communications system to which embodiments of this application are applicable, and terms and communication processes involved in embodiments of this application.

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 exemplarily shows one network device and two terminals. Optionally, the wireless communications system 100 may include a plurality of network devices, and another quantity of terminal devices may be included in a coverage range of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a sixth-generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be used as a base station. For example, the UE may act as a scheduling entity, which provides a sidelink signal between UEs in V2X, D2D, or the like. For example, a cellular phone and a vehicle communicate with each other by using a sidelink signal. A cellular phone and a smart home device communicate with each other, without needing to relay a communication signal by using a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move depending on a location of the mobile base station. In other examples, a helicopter or an unmanned aerial vehicle may be configured to function as a device in communication with another base station.

In some deployments, the network device in embodiments of this application may be a CU or a DU, or the network device includes a CU and a DU. A gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

## Multi-beam system

A design objective of a communications system (for example, NR) includes high-bandwidth communication with a high frequency band (for example, a frequency band above 6 GHz). When a working frequency becomes higher, path loss in a transmission process increases, which affects a coverage capability of a high-frequency system. Therefore, to effectively ensure a coverage range of a high frequency band, an effective technical solution is based on massive multiple-input multiple-output (Massive multiple-in multiple-out, Massive MIMO), to form a shaped beam with a larger gain, overcome propagation loss, and ensure a coverage range of a communications system.

Currently, a common large-scale antenna array is a millimeter-wave antenna array. Because a wavelength emitted by the millimeter-wave antenna array is relatively short, a spacing between antenna elements of the antenna array may be relatively short, and an aperture of an antenna element may be relatively small, so that more physical antenna elements may be integrated into a two-dimensional antenna array with a limited size.

In addition, because a size of the millimeter-wave antenna array is limited, a digital beamforming manner cannot be used due to factors such as hardware complexity, costs, and power consumption. Instead, usually an analog beamforming manner is used, which may reduce implementation complexity of a device while enhancing network coverage.

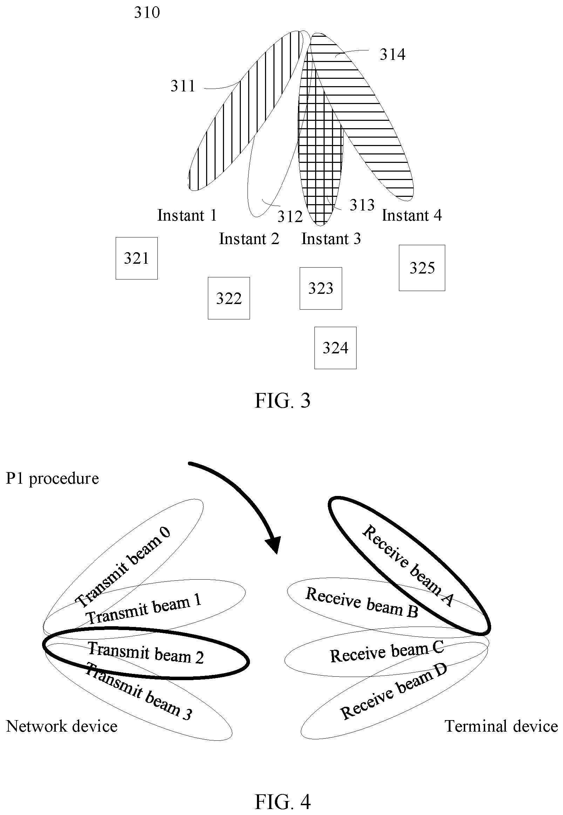

To facilitate understanding of a multi-beam system, with reference to FIG. 2 and FIG. 3, the following describes a beam-based communication process by using a scenario in which a network device communicates with a terminal as an example.

Referring to FIG. 2, in a conventional communications system (for example, an LTE communications system), a relatively wide beam (beam) 210 is generally used to cover an entire cell (or referred to as a "sector"). In this way, terminals (for example, terminals 211 to 215) in the cell may communicate with a network device by using this relatively wide beam at each instant, for example, obtain a transmission resource allocated by the network device.

Referring to FIG. 3, in a recent communications system (for example, NR), a multi-beam (Multi-beam) system 310 may be used to cover an entire cell, that is, each beam (for example, beams 311 to 314) in the multi-beam system covers a relatively small range in the cell, and an effect of covering the entire cell by using a plurality of beams is achieved in a manner of beam sweeping (beam sweeping).

In a beam sweeping process, different beams are used at different instants to cover different areas in the cell. For example, at an instant 1, the communications system may cover, by using the beam 311, an area in which a terminal 321 is located. At an instant 2, the communications system may cover, by using the beam 312, an area in which a terminal 322 is located. At an instant 3, the communications system may cover, by using the beam 313, an area in which the terminal 323 and the terminal 324 are located. At an instant 4, the communications system may cover, by using the beam 314, an area in which a terminal 325 is located.

For the multi-beam system, transmit energy may be more concentrated because a relatively narrow beam is used, thereby covering a further distance. However, because the beam is relatively narrow, each beam can cover only some areas in the cell. Therefore, the multi-beam system may be understood as "trading time for space".

Generally, a beam used by a transmit end to transmit a signal is referred to as a "transmit beam", and a beam used by a receive end to receive a signal is referred to as a "receive beam".

In some cases, the transmit beam may also be referred to as a spatial domain transmission filter (spatial domain transmission filter). Correspondingly, the receive beam may also be referred to as a spatial domain reception filter (spatial domain reception filter). In some other cases, the transmit beam may also be referred to as a spatial domain transmission parameter (spatial domain transmission parameter). Correspondingly, the receive beam may also be referred to as a spatial domain reception parameter (spatial domain reception parameter). For ease of understanding, the term "beam" is mainly used as an example for description in embodiments of this application.

In the scenario in which the network device communicates with the terminal, if the network device and the terminal support multi-beam transmission, before the network device communicates with the terminal, the network device and the terminal need to select a proper transmit beam and a proper receive beam by using a beam management process (which, for example, may include processes such as beam selection, beam measurement, and measurement reporting). For example, in a process of selecting a transmit beam, the network device may transmit a plurality of reference signals in turn by using different transmit beams, and resources corresponding to the plurality of reference signals are different. Correspondingly, the terminal device also receives the plurality of reference signals respectively by using a plurality of receive beams, and measures the detected reference signals, to obtain beam measurement results (also referred to as "measurement results"). Then, the terminal device selects some reference signals from the plurality of detected reference signals, and feeds back resource identifiers of the selected reference signals and corresponding beam measurement results to the network device, so that the network device selects a proper transmit beam as a transmit beam for subsequent communication with the terminal.

Generally, after the network device selects the proper transmit beam, the terminal device needs to select a receive beam that matches the transmit beam, to communicate with the network device. For ease of understanding, the following describes a beam management process by using downlink beam management as an example. Generally, beam management may include processes such as beam selection, beam measurement, and measurement reporting.

**Beam selection**

For ease of understanding, with reference to FIG. 4 to FIG. 6, the following uses a basic procedure of downlink beam selection as an example for description. A process of pairing a transmit beam and a receive beam in downlink transmission may generally include three main procedures, which are respectively denoted as P1, P2, and P3. P1 is a coarse pairing between a downlink transmit beam and a downlink receive beam, P2 is a fine adjustment of a downlink transmit beam on a network side, and P3 is a fine adjustment of a downlink receive beam on a terminal side.

Referring to FIG. 4, it is assumed that a network device has four downlink transmit beams: a transmit beam 0 to a transmit beam 3, and a terminal device has four downlink receive beams: a receive beam A to a receive beam D. During initial access, coarse pairing may be implemented by using a random access procedure. That is, after the initial access is completed, a beam pairing with relatively good link quality may be established between the network device and the terminal device, which may support subsequent data transmission. In this case, if both the transmit beam and the receive beam are relatively narrow, it takes a relatively long time to complete alignment between the transmit beam and the receive beam, which brings a relatively large latency to the system. Therefore, to quickly complete coarse pairing between beams, correspondingly the transmit beam and the receive beam may be relatively wide, and a formed beam pairing may have good performance, but may not be an optimal pairing.

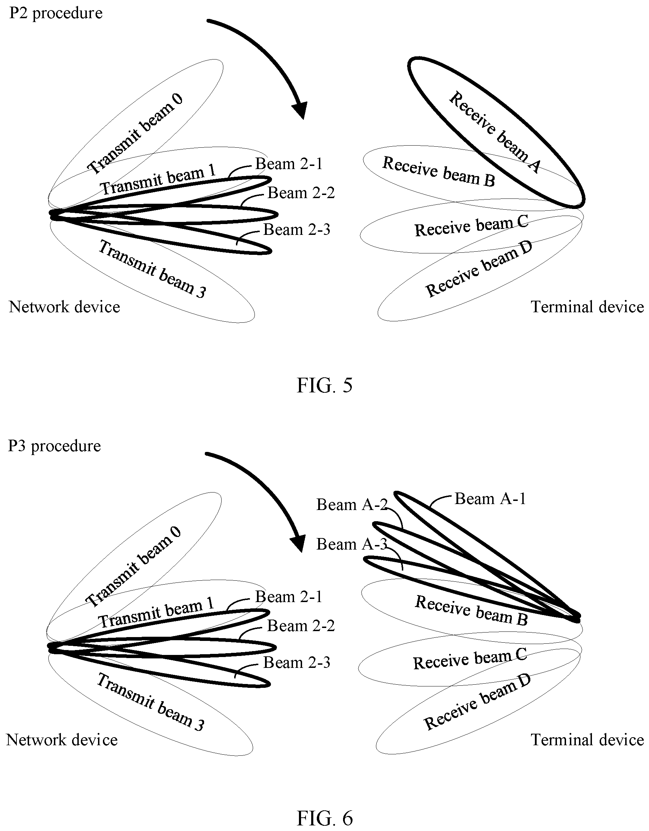

Based on a coarse pairing of P1, fine adjustment of the transmit beam and the receive beam (respectively corresponding to the P2 and P3 procedures) may be performed, and a narrower beam is used to further improve transmission performance. Referring to FIG. 5, coarse pairing between a downlink transmit beam 2 and a downlink receive beam A is completed by the P1 procedure. Then, fine adjustment may be performed on a transmit beam 2. Correspondingly, a network device may transmit three narrower beams: a beam 2-1, a beam 2-1, and a beam 2-3. Correspondingly, a terminal device receives, by using a receive beam A, signals transmitted on the beam 2-1, the beam 2-1, and the beam 2-3, and measures a layer 1 reference signal received power (layer1-reference signal receiving power, L1-RSRP). Then, based on a beam measurement result, the terminal device reports one or more selected beams to the network device.

Referring to FIG. 5, coarse pairing between the downlink transmit beam 2 and the downlink receive beam A is completed by the P1 procedure. To perform fine adjustment on a receive beam, the network device may transmit a measurement signal on the beam 2 for a plurality of times. Correspondingly, the terminal device may receive a signal transmitted on the beam 2 by using three narrower beams, that is, a beam A-1, a beam A-2, and a beam A-3, and perform measurement. Then, the terminal device may determine, based on a beam measurement result, which narrow beam is suitable for the transmit beam 2. In this procedure, the terminal device does not need to report, to the network device, the narrow beam selected by the terminal device to receive the transmit beam 2.

It should be noted that the P1 to P3 procedures described above indicate an exemplary procedure of beam selection. In embodiments of this application, the beam selection procedure may be implemented in another manner, which is not limited in embodiments of this application.

The foregoing describes an exemplary procedure of beam selection with reference to FIG. 4 to FIG. 6, and the following further describes a beam measurement process and a reporting process.

In addition, a process of pairing a transmit beam and a receive beam in uplink transmission may also generally include three main procedures, which are respectively denoted as U1, U2, and U3. U1 is a coarse pairing between an uplink transmit beam and an uplink receive beam, U2 is a fine adjustment of an uplink receive beam on a network side, and U3 is a fine adjustment of an uplink transmit beam on a terminal side. The U1 to U3 processes are similar to the P1 to P3 processes. For brevity, details are not described in the following.

## Beam measurement

As described above, in a basic procedure of beam selection, a beam needs to be measured accordingly. Currently, measurement of a beam may be implemented by measuring a reference signal transmitted on the beam.

In some implementations, measurement of a downlink beam may be implemented by using a CSI-RS or an SSB transmitted on the downlink beam. In some other implementations, measurement of an uplink beam may be implemented by using an SRS or an SSB transmitted on a downlink beam.

In some implementations, a measurement quantity of layer 1 (layer 1, L1) measurement may be used as a measurement quantity for beam measurement (uplink beam measurement or downlink beam measurement). L1 measurement may be directly processed at a physical layer, and has a relatively short processing latency. Currently, an L1 measurement quantity used for beam measurement may include a layer 1 reference signal received power (L1-RSRP) and a layer 1 signal-to-interference-plus-noise ratio (L1-SINR).

In some other implementations, a measurement quantity of layer 1 (layer 1, L1) measurement may be used as a measurement quantity for uplink beam measurement. L1 measurement may be directly processed at a physical layer, and has a relatively short processing latency. Currently, an L1 measurement quantity used for beam measurement may include: a layer 1 reference signal received power (L1-reference signal receiving power, L1-RSRP), a layer 1 signal-to-interference-plus-noise ratio (L1-signal to interference plus noise ratio, L1-SINR), and layer 1 reference signal received quality (L1-reference signal receiving quality, L1-RSRQ).

It should be noted that in embodiments of this application, in addition to the L1 measurement quantity described above, another measurement quantity, for example, an L3 measurement quantity, may also be used. Certainly, the measurement quantity applicable to embodiments of this application may alternatively be a measurement quantity newly introduced into a future communications system.

**Measurement reporting**

In some implementations, a terminal device may report one or more pieces of information to a network device based on a beam measurement result, where each piece of information includes beam indication information (for example, an identifier of a reference signal or a number of a reference signal) and a corresponding measurement quantity.

**Beam management based on artificial intelligence (artificial intelligence, AI)**

In the beam selection process described above with reference to FIG. 4 to FIG. 6, generally a proper beam can be selected only after all combinations of receive beams and transmit beams are traversed. However, it takes a relatively long time to traverse all the combinations, resulting in relatively low efficiency of beam selection.

For example, it is assumed that 64 different downlink transmit directions (carried by a maximum of 64 SSBs) are deployed on an FR2 for a network device. Correspondingly, in a receiving process, a terminal device simultaneously performs receive beam sweeping by using one or more antenna panels, and each antenna panel has four receive beams. In this case, the terminal device needs to measure at least 256 beam pairs, that is, downlink resource overheads of 256 resources are required. In terms of time, each SSB period is about 20 ms, and it takes four SSB periods to complete measurement of four receive beams. It is assumed that a plurality of receive antenna panels may simultaneously perform beam sweeping, which requires at least 80 ms.

With an increase in a quantity of beams in a future large-scale MIMO system, to obtain an optimal beam pair through matching, a beam management solution based on beam sweeping will only result in larger reference signal transmission overheads and a larger beam sweeping latency. Therefore, to avoid the foregoing problem, beam management based on an AI model is proposed in R18. The following describes a beam management solution based on an AI model with reference to a training process and a prediction process of the AI model.

It is assumed that the AI model is used to predict a usable beam from a beam set A. Correspondingly, in a training phase, a beam measurement result of a beam set B may be used as training data of the AI model, that is, the AI model is trained based on the beam measurement result of the beam set B, so that the AI model may predict a usable beam from the beam set A.

It should be noted that the beam measurement result of the beam set B may include a measurement result corresponding to an L1 measurement quantity and/or indication information (for example, an identifier of a transmit beam, an identifier of a receive beam, or an identifier of a beam pair) of a selected beam from the beam set B.

In some implementations, the training data may further include label information of the beam set A, and the label information is used to indicate one or more of the following beams in the beam set A: an optimal transmit beam, an optimal receive beam, an optimal beam pair, a plurality of good transmit beams, a plurality of good receive beams, and a good beam pair.

In a prediction phase, an input of the AI model may include a link quality measurement result (for example, an L1 measurement quantity) corresponding to a beam in the beam set A, and a prediction result output by the AI model may include a target beam selected from the beam set A and link quality corresponding to the target beam.

In some implementations, the target beam may include one or more beams. For example, the target beam includes one beam. In this case, the target beam may be an optimal beam or a good beam in the beam set A. For example, the target beam includes a plurality of beams. In this case, the target beam may include a plurality of beams in the beam set A that meet a requirement, where a beam meeting the requirement may be understood as: link quality corresponding to the beam meets the requirement, for example, the link quality corresponding to the beam is greater than or equal to a threshold.

In some other implementations, the target beam may include one or more beam pairs, where each beam pair may include a receive beam or a transmit beam. For example, the target beam is one beam pair. In this case, the target beam may be an optimal beam pair or a good beam pair in the beam set A. For example, the target beam includes a plurality of beam pairs. In this case, the target beam may include a plurality of beam pairs in the beam set A that meet a requirement, where a beam pair meeting the requirement may be understood as: link quality corresponding to the beam pair meets the requirement, for example, the link quality corresponding to the beam pair is greater than or equal to a threshold.

It should be noted that link quality in embodiments of this application may be determined based on one or more types of measurement quantities described above. Certainly, link quality in embodiments of this application may be determined based on another measurement quantity in a future communications system, which is not limited in embodiments of this application.

In addition, that link quality is determined based on one or more types of measurement quantities may be understood as: the link quality is obtained by processing the one or more types of measurement quantities. Certainly, the link quality may also be a measurement quantity. This is not limited in embodiments of this application.

It should be further noted that if a prediction result indicates only one beam in a beam pair, the other beam in the beam pair may be determined in another manner. For example, the other beam may be determined based on one process or some processes in P1 to P3 described above, or certainly, may be determined based on one process or some processes in U1 to U3, which is not limited in embodiments of this application.

In some implementations, the beam set B and the beam set A may be different beam sets. In some implementations, the beam set B may be a subset of the beam set A, and correspondingly, prediction of a relatively large quantity of beams (beams in the beam set A) may be implemented by measuring a relatively small quantity of beams (beams in the beam set B). Compared with the foregoing solution of performing beam selection based on traversing of all combinations, this is conductive to reducing a time for executing a beam selection process. Certainly, in embodiments of this application, a beam in the beam set B and a beam in the beam set A may be completely different. For example, there is no intersection between the beam set B and the beam set A, but a beam direction corresponding to the beam set B may be similar to a beam direction corresponding to the beam set A.

In some other implementations, the beam set B and the beam set A may be completely the same.

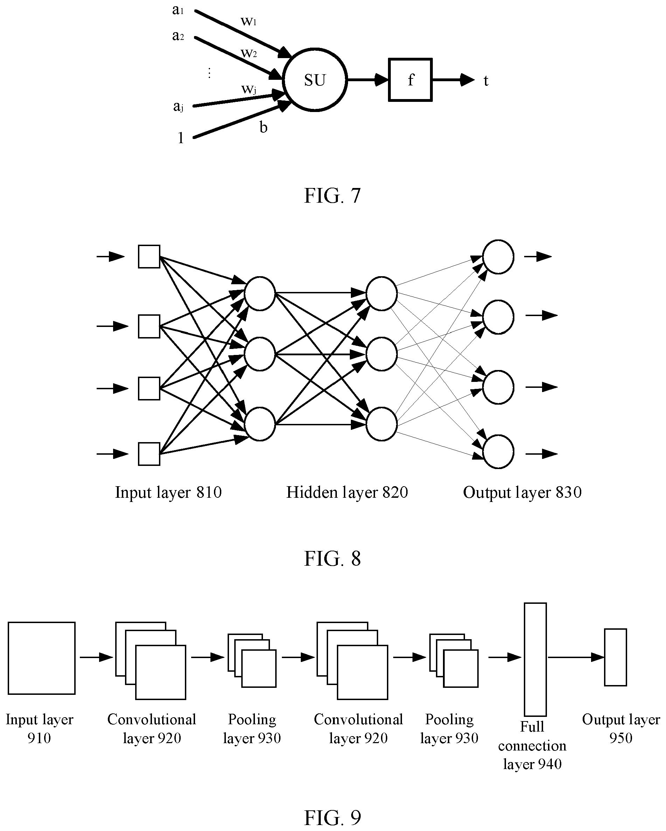

For ease of understanding, the following describes an AI model applicable to embodiments of this application with reference to FIG. 7 to FIG. 10. Certainly, the AI model used in embodiments of this application may be another model, which is not limited in embodiments of this application.

**Neural network**

In recent years, artificial intelligence research represented by a neural network has made great achievements in many fields, and will also play an important role in people's production and life for a long time to come. A neural network may be understood as an operation model including a plurality of neuron nodes that are connected, where a connection between nodes may represent a weighting value from an input signal to an output signal, which is generally referred to as a weight. Each node performs weighted summation on different input signals and outputs the signals by using a specific activation function.

Referring to FIG. 7, a neuron may implement nonlinear mapping based on an activation function, where an input of the neuron may be denoted as A, each dimension of the input is denoted as $a_j$, and a corresponding weight is denoted as $w_j$. The weight and a summation unit (summation units, SU) together enhance or weaken the input. In addition, an output of the SU may be input into an activation function f to obtain an output t, where a value of j is 1,2,...,n.

Common neural networks include a convolutional neural network (convolutional neural network, CNN), a recurrent neural network (recurrent neural network, RNN), a deep neural network (deep neural network, DNN), and the like.

With reference to FIG. 8, the following describes a neural network to which embodiments of this application are applicable. Layers of the neural network shown in FIG. 8 may be classified into three types according to locations of different layers: an input layer 810, a hidden layer 820, and an output layer 830. Generally, the first layer is the input layer 810, the last layer is the output layer 830, and the middle layers between the first layer and the last layer are the hidden layers 820.

The input layer 810 is configured to input data. The input data may be, for example, a received signal received by a receiver. The hidden layer 820 is configured to process the input data, for example, perform decompression processing on a received signal. The output layer 830 is configured to output processed output data, for example, output a decompressed signal.

As shown in FIG. 8, the neural network includes a plurality of layers, and each layer includes a plurality of neurons. Neurons between the layers may be fully connected, or may be partially connected. For connected neurons, an output of neurons of an upper layer may be used as an input of neurons of a lower layer.

With continuous development of neural network research, neural network deep learning algorithms are proposed in recent years. A relatively large quantity of hidden layers are introduced into a neural network to form a DNN. More hidden layers enable the DNN to better describe a complex situation in a real world. In theory, a model with a larger quantity of parameters has higher complexity and a larger "capacity", which means that the model can complete more complex learning tasks. This neural network model is widely used in pattern recognition, signal processing, optimization combination, anomaly detection, and the like.

A CNN is a deep neural network with a convolutional structure. As shown in FIG. 9, the structure of the CNN may include an input layer 910, convolutional layers 920, pooling layers 930, a full connection layer 940, and an output layer 950.

Each convolutional layer 920 may include a plurality of convolutional operators, and a convolutional operator is also referred to as a kernel. A function of the convolutional operator may be considered as a filter for extracting specific information from an input signal. The convolutional operator may essentially be a weight matrix, and the weight matrix is generally pre-defined.

Weight values in these weight matrices are obtained through a large amount of training in actual application. Each weight matrix formed by the weight values obtained through training may extract information from an input signal, to assist the CNN in performing correct prediction.

When the CNN has a plurality of convolutional layers, an initial convolutional layer usually extracts more general features, and the general features may also be referred to as lower-level features. As a depth of the CNN increases, features extracted from subsequent convolutional layers are increasingly complex.

Regarding the pooling layers 930, as a quantity of training parameters often needs to be reduced, a pooling layer often needs to be periodically introduced behind the convolutional layer. For example, as shown in FIG. 9, one pooling layer may follow one convolutional layer, or one or more pooling layers may follow a plurality of convolutional layers. In a signal processing process, the only purpose of the pooling layer is to reduce a size of space occupied by extracted information.

Regarding the full connection layer 940, after the processing of the convolutional layers 920 and the pooling layers 930, it is still insufficient for the CNN to output required output information. As mentioned above, the convolutional layers 920 and the pooling layers 930 only extract features and reduce parameters brought by the input data. In order to generate the final output information (for example, a bitstream of original information transmitted by a transmit end), the CNN needs to use the full connection layer 940. Generally, the full connection layer 940 may include a plurality of hidden layers. Parameters included in the plurality of hidden layers may be obtained by performing pre-training according to related training data of a specific task type. For example, the task type may include decoding a data signal received by a receiver, and for another example, the task type may alternatively include performing channel estimation based on a pilot signal received by the receiver.

A layer behind the plurality of hidden layers in the full connection layer 940, that is, the last layer of the entire CNN, is the output layer 950, which is configured to output a result. Generally, a loss function (for example, a loss function similar to a classification cross entropy) is set for the output layer 950, to calculate a prediction error, or in other words, to evaluate a degree of difference between the result (also referred to as a predicted value) output by the CNN model and an ideal result (also referred to as a true value).

To minimize the loss function, the CNN model needs to be trained. In some implementations, the CNN model may be trained using a backpropagation algorithm (backpropagation algorithm, BP). A training process of the BP includes a forward propagation process and a backward propagation process. In the process of forward propagation (as shown in FIG. 9, propagation from 910 to 950 is forward propagation), the input data is input into the foregoing layers of the CNN model, processed layer by layer, and transmitted to the output layer. If a difference between the result output at the output layer and the ideal result is relatively large, the training process is switched from forward propagation to backward propagation (as shown in FIG. 9, propagation from 950 to 910 is backward propagation) with an optimization objective of minimizing the foregoing loss function. A partial derivative of each neuron weight value with respect to the optimization objective is obtained layer by layer, to constitute a gradient of a weight value vector with respect to the optimization objective, which is used as a basis for modifying a model weight. Then, the training process of the CNN is implemented by the weight modification process. When the foregoing error reaches an expected value, the training process of the CNN ends.

It should be noted that the CNN shown in FIG. 9 is merely an example of a convolutional neural network. In a specific application, the convolutional neural network may also in another form of network model, which is not limited in embodiments of this application.

An objective of an RNN is to process sequence data. In a conventional neural network model (for example, the CNN model), from an input layer to hidden layers and then to an output layer, different types of layers are fully connected, but layers of the same type are not connected. This common neural network cannot resolve many problems. For example, to predict a next word in a sentence, words before this word are generally used because words in a sentence are not independent of each other. A reason why the RNN is named as a recurrent neural network is that a current output of a sequence is also related to a previous output, which is specifically characterized in that the network memorizes previous information and applies the information to calculation of a current output, that is, nodes between hidden layers are no longer connectionless but connected, and an input of a hidden layer includes not only an output of the input layer but also an output of the hidden layer at a previous instant. Theoretically, the RNN can process sequence data of any length.

Training for the RNN is similar to that for a conventional ANN (artificial neural network). ABP error backpropagation algorithm is also used, but there is a difference. If the RNN network is unfolded, parameters W, U, and V are shared, but this is not the case in a conventional neural network. In addition, in a gradient descent algorithm, an output of each step depends on not only a network of a current step, but also states of the network in previous several steps. For example, when t = 4, the training process is transferred backward by three steps with respective gradients being calculated. This learning algorithm is referred to as backpropagation through time (back propagation through time, BPTT).

Since an artificial neural network and a convolutional neural network already exist, why is a recurrent neural network required? The reason is quite simple. Prerequisite assumptions of the convolutional neural network and the artificial neural network are both: elements are independent of each other, and an input and an output are also independent of each other, for example, a cat and a dog. However, in the real world, many elements are connected. For example, stocks change with time. One person says, "I like to travel. Yunnan is my favorite place, and I will go to _if I have time." Everyone should know that "Yunnan" needs to be filled in the blank here, because this can be inferred from the context. However, it is difficult for a machine to do so. Consequently, a current recurrent neural network emerges. An essence of the recurrent neural network is having an ability to remember like a human being. Therefore, an output of the recurrent neural network depends on a current input and a memory.

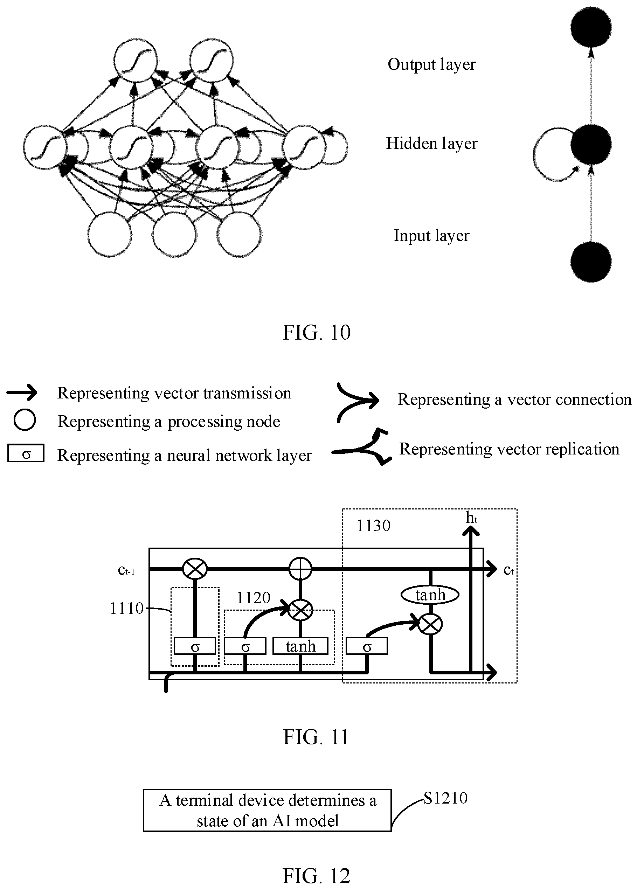

FIG. 10 is a schematic structural diagram of an RNN. Each circle may be considered as a unit, and operations performed by each unit are the same. Therefore, the RNN may be folded into the form as shown in the left part of FIG. 10. The RNN may be explained in one sentence that a unit structure is repeatedly used.

Currently, to resolve problems of the RNN such as gradient explosion or disappearance, a long short-term memory (long short-term memory, LSTM) model is obtained through transformation based on the RNN.

Referring to FIG. 11, a new memory unit $c_t$ (which may also be referred to as a "cell state (cell state)") is introduced into LSTM, and is used to perform linear transfer of cyclic information and output information to an external state $h_t$ of a hidden layer. At each instant t, $c_t$ records historical information up to a current instant. Unlike the RNN, in which only the most recent state is considered, the memory unit determines which states should be maintained and which states should be forgotten, thereby resolving a defect of a conventional RNN in long-term memory.

Still referring to FIG. 11, to implement the foregoing state selection, a gate control mechanism is introduced into the memory unit, to control a path of information transfer, which is similar to a gate in a data circuit, where "0" indicates disabled, and "1" indicates enabled. The memory unit includes a forgetting gate 1110, an input gate 1120, and an output gate 1130. The forgetting gate is used to control how much information needs to be forgotten by a memory unit $c_{t-1}$ of a previous instant, and the input gate is used to control how much information in a candidate state $\widehat{c}_t$ of a current instant needs to be stored, and the output gate is used to control how much information needs to be output to an external state ht by the memory unit $c_t$ of the current instant.

Currently, although a beam management method based on a first model (for example, an AI model) is discussed and studied in R18, how to monitor and manage a running state of the first model is not discussed yet. Therefore, the following problem may exist: a target beam (for example, an optimal transmit beam, an optimal receive beam, or an optimal beam pair) in a prediction result output by the first model is not a true optimal choice. However, a terminal device and a network device still use the prediction result. When link quality corresponding to the target beam is extremely poor, communication cannot be performed based on the target beam.

For example, the first model is an AI model. With a complex change of a channel environment in a moving process of the terminal device, a wireless communication environment (for example, a channel status) corresponding to training data of the AI model may not match an actually deployed wireless communication environment. Consequently, the AI model cannot accurately predict a beam to be used for communication, that is, the trained AI model has limited generalization. In this case, the target beam (for example, an optimal transmit beam, an optimal receive beam, or an optimal beam pair) in the prediction result output by the AI model is not a true optimal choice, and even communication cannot be performed based on the target beam because the link quality corresponding to the target beam is extremely poor. Therefore, a method for managing a running state of an AI model is urgently needed, which is conductive to improving a success rate of communication. With reference to FIG. 12, the following describes a beam management method according to an embodiment of this application.

It should be noted that, for ease of understanding, the following uses an example in which a first model is an AI model for description. In this embodiment of this application, the first model may be another model used for beam management.

FIG. 12 is a schematic flowchart of a beam management method according to an embodiment of this application. The method shown in FIG. 12 includes step S1210.

In step S1210, a terminal device determines a state of an AI model.

The AI model is used to perform beam prediction for a target beam set, and the state (or referred to as a "running state") of the AI model includes one or more of an active state, an inactive state, or a monitoring state.

The active state is used to indicate that the AI model is in a working state. In this case, a target beam indicated by a prediction result of the AI model may be used for communication. In other words, accuracy of the prediction result output by the AI model in the active state is relatively high, and communication may be performed based on the target beam indicated by the prediction result.

The inactive state is used to indicate that the AI model is in a non-working state. In this case, a target beam indicated by a prediction result of the AI model may not be used for communication. In other words, accuracy of the prediction result output by the AI model in the inactive state is relatively low, and communication may not be performed based on the target beam indicated by the prediction result.

In some implementations, if the AI model is in the inactive state, to ensure continuity of communication between the terminal device and a network device, beam management may be performed on the target beam set based on a manner of beam sweeping. For example, performing beam management based on the manner of beam sweeping may adopts the beam management manner described above with reference to FIG. 4 to FIG. 6. Certainly, in this embodiment of this application, if the continuity of the communication between the terminal device and the network device is not considered, and the AI model is in the inactive state, beam management may also be stopped.

In some implementations, if the AI model is in the inactive state, the AI model may be further updated online, to improve prediction accuracy of the AI model. In this embodiment of this application, whether to update the AI model online may be determined based on an applicable scope of the AI model, which is to be described in the following. For brevity, details are not described herein again.

The AI model is in the inactive state perhaps because the AI model itself cannot provide beam prediction, and thus the AI model in the inactive state may be updated online. Certainly, a reason why the AI model is in the inactive state may be that a wireless communication environment in which the terminal device is located changes, not that an error occurs on the AI model. Therefore, the AI model in the inactive state may not be updated online. A specific solution of performing an online update is to be described in the following. For brevity, no limitation is imposed herein.

The monitoring state is also referred to as a "model monitoring state (model monitoring state, MMS)", and is used to determine a monitoring result of the AI model. The monitoring result is used to indicate accuracy of a prediction result of the AI model. The following describes in detail a method for determining accuracy of a prediction result with reference to a determining manner 1 and a determining manner 2. For brevity, details are not described herein again.

In some implementations, the monitoring result may be obtained by continuously monitoring the state of the AI model within a time period (hereinafter referred to as a "first time period"). Therefore, the first time period may also be referred to as a "monitoring time window" or a "first time window". For example, the monitoring result may indicate overall accuracy of a plurality of prediction results predicted by the AI model within the first time period. For another example, it is assumed that the AI model may output only one prediction result within the first time period. Correspondingly, the monitoring result may indicate accuracy of one prediction result output by the AI model within the first time period. This is not limited in embodiments of this application.

In some implementations, the monitoring result may be used to determine whether the AI model enters the active state or the inactive state. For example, when the monitoring result indicates that accuracy of a prediction result is relatively high, the AI model may enter the active state, or in other words, the AI model enters the active state from the monitoring state. Otherwise, if the monitoring result indicates that accuracy of a prediction result is relatively low, the AI model may enter the inactive state, or in other words, the AI model enters the inactive state from the monitoring state.

It should be noted that the foregoing communication may include communication between the terminal device and a network device. Certainly, the communication may alternatively include communication between terminal devices. This is not limited in embodiments of this application. For ease of understanding, in this embodiment of this application, communication between the terminal device and a network device is used as an example for description.

As described above, the monitoring result is used to indicate accuracy of a prediction result. Correspondingly, an embodiment of this application further provides a method for determining accuracy of a prediction result. In some implementations, accuracy of a prediction result of the AI model in the monitoring state may be determined based on a beam measurement result of the target beam set. In other words, the beam measurement result of the target beam set is used as a label to determine accuracy of a prediction result of the AI model on the target beam set.

The beam measurement result may be, for example, a beam measurement result determined in the foregoing manner of beam sweeping, or the beam measurement result may be a beam measurement result determined in the foregoing manner of traversing beam combinations in the target beam set, where the target beam set may be the beam set A described above. Certainly, in this embodiment of this application, the beam measurement result may also be a beam measurement result obtained by measuring some beam combinations in the beam set A. This is not limited in embodiments of this application.

The following describes a method for determining whether a prediction result is accurate based on a beam measurement result, which is applicable to embodiments of this application. In some implementations, accuracy of a prediction result may be determined based on one or more of the following: a beam indicated by the prediction result; link quality corresponding to the beam indicated by the prediction result; a beam indicated by a beam measurement result; or link quality corresponding to the beam indicated by the beam measurement result.

For ease of understanding, the following describes, with reference to the determining manners 1 and 2, a method for determining accuracy of a prediction result applicable to an embodiment of this application.

Determining manner 1: Determining accuracy of a prediction result of an AI model based on a beam indicated by the prediction result and a beam indicated by a beam measurement result is used as an example. The accuracy of the prediction result of the AI model may be determined based on a quantity of times that the beam indicated by the prediction result does not match the beam indicated by the beam measurement result within a first time period. Therefore, this determining manner may also be referred to as a "determining method based on a quantity of prediction failures". For example, when the quantity of mismatches is greater than a threshold of quantity of times x (also referred to as a "first threshold x"), the accuracy of the prediction result of the AI model is relatively low, or in other words, the prediction result of the AI model is inaccurate, or in other words, the AI model is not applicable to a current wireless communication environment. Otherwise, when the quantity of mismatches is less than or equal to the threshold of quantity of times x, the accuracy of the prediction result of the AI model is relatively high, or in other words, the prediction result of the AI model is accurate, or in other words, the AI model is applicable to a current wireless communication environment.

In some implementations, the threshold of quantity of times x may be configured by a network device or determined by a specific implementation of a terminal device. Certainly, the threshold of quantity of times may also be pre-defined in a protocol.

A process of selecting a downlink beam is used as an example. It is assumed that a terminal device triggers K beam sweeping processes for a target beam set within the first time period, indexes of K optimal transmit beams indicated by a beam measurement result are respectively $\{m_1, m_2...m_K\}$, and K L1-RSRP values corresponding to the optimal transmit beams are respectively $\{r_1, r_2...r_K\}$. Correspondingly, the AI model executes K prediction processes (or referred to as "online reasoning processes") within the first time period, indexes of K optimal transmit beams indicated by a prediction result are $\{m_1', m_2',...m_K'\}$, and L1-RSRP values corresponding to the K optimal transmit beams are $\{r_1', r_2',...r_K'\}$, where K is a positive integer greater than or equal to 1.

Correspondingly, based on the determining manner 1, if a quantity of times that the indexes of the K optimal transmit beams indicated by the prediction result do not match the indexes of the K optimal transmit beams indicated by the beam measurement result is greater than the threshold x, the AI model is not appliable to a current wireless communication environment. Otherwise, if the quantity of times that the indexes of the K optimal transmit beams indicated by the prediction result do not match the indexes of the K optimal transmit beams indicated by the beam measurement result is less than or equal to the threshold x, the AI model is applicable to the current wireless communication environment.

In some implementations, considering that a larger value of K may cause more mismatches, in this embodiment of this application, a correspondence between K and the threshold x may be further established, or in other words, K and the threshold x form a parameter combination {K,x}. In this way, when determining K, the terminal device may also determine the threshold x based on the correspondence between K and the threshold x.

In some implementations, for a terminal device or an application scenario that has a relatively loose requirement on a prediction result output by the AI model, a relatively large threshold of quantity of times may be configured, so that it is easier for the AI model to pass monitoring, and working efficiency of the AI model is improved. For a terminal device or an application scenario that has a relatively strict requirement on a prediction result output by the AI model, a relatively large threshold of quantity of times may be configured, to obtain more reliable link performance.

The terminal device that has a relatively loose requirement on the prediction result output by the AI model may include an IoT terminal device. Correspondingly, the terminal device that has a relatively strict requirement on the prediction result output by the AI model may include a vehicle-mounted terminal device, a mobile phone, or the like.

The application scenario may include a service type of a to-be-transmitted service. For example, the application scenario that has a relatively loose requirement on the prediction result output by the AI model may be a scenario in which a common service is transmitted. Correspondingly, the application scenario that has a relatively strict requirement on the prediction result output by the AI model may be a scenario in which a URLLC service is transmitted.

In addition, it should be noted that, in determining accuracy of a prediction result based on the determining manner 1, the prediction result and a beam measurement result may not indicate link quality (for example, L1-RSRP) corresponding to a beam. Certainly, in determining accuracy of a prediction result based on the determining manner 1, the prediction result and a beam measurement result may indicate link quality (for example, L1-RSRP) corresponding to a beam, which is not limited in embodiments of this application.

Determining manner 2: Determining accuracy of a prediction result of an AI model based on link quality ("link quality 1" for short) corresponding to a beam indicated by the prediction result and link quality ("link quality 2" for short) corresponding to a beam indicated by a beam measurement result is used as an example. The accuracy of the prediction result of the AI model may be determined based on a difference between the link quality 1 and the link quality 2 within a first time period. Therefore, this determining manner may also be referred to as a "determining method based on link quality". For example, when the difference is greater than a difference threshold (also referred to as a "second threshold"), the accuracy of the prediction result of the AI model is relatively low, or in other words, the prediction result of the AI model is inaccurate, or in other words, the AI model is not appliable to a current wireless communication environment. Otherwise, when the difference is less than or equal to the difference threshold, the accuracy of the prediction result of the AI model is relatively high, or in other words, the prediction result of the AI model is accurate, or in other words, the AI model is applicable to a current wireless communication environment.

It should be noted that the difference may be understood as a difference value, that is, a difference value between the link quality 1 and the link quality 2. The difference may alternatively be a proportion value, that is, a percentage of the difference between the link quality 1 and the link quality 2 to the link quality 2. This is not limited in embodiments of this application.

In some implementations, the link quality 1 may be an average value of a plurality of link quality values indicated by a plurality of prediction results obtained by performing a plurality of times of prediction by the AI model within the first time period. Determining link quality based on an L1-RSRP is used as an example. It is assumed that K L1-RSRP values are obtained through prediction within the first time period. Correspondingly, the link quality 1 may be an average value of the K L1-RSRP values.

In addition, the link quality 1 may be a maximum value in a plurality of link quality values indicated by a plurality of prediction results obtained by performing a plurality of times of prediction by the AI model within the first time period. Determining link quality based on an L1-RSRP is used as an example. It is assumed that K L1-RSRP values are obtained through prediction within the first time period. Correspondingly, the link quality 1 may be a maximum value in the K L1-RSRP values. Certainly, the link quality 1 is not specifically limited in embodiments of this application. For example, the link quality 1 may be a minimum value in a plurality of link quality values indicated by a plurality of prediction results.

In some other implementations, the link quality 2 may be determined based on an average value of a plurality of link quality values indicated by a plurality of beam measurement results obtained through a plurality of times of measurement within the first time period. Determining link quality based on an L1-RSRP is used as an example. It is assumed that K L1-RSRP values are obtained through measurement within the first time period. Correspondingly, the link quality 2 may be determined based on an average value of the K L1-RSRP values.

In addition, the link quality 2 may be a maximum value in a plurality of link quality values indicated by a plurality of beam measurement results obtained through a plurality of times of measurement within the first time period. Determining link quality based on an L1-RSRP is used as an example. It is assumed that K L1-RSRP values are obtained through measurement within the first time period. Correspondingly, the link quality 2 may be a maximum value in the K L1-RSRP values. Certainly, the link quality 2 is not specifically limited in embodiments of this application. For example, the link quality 2 may be a minimum value in a plurality of link quality values indicated by a plurality of prediction results.

In some implementations, the difference threshold may be configured by a network device or determined by a specific implementation of a terminal device. Certainly, the difference threshold may also be pre-defined in a protocol.

A process of selecting a downlink beam is used as an example. It is assumed that a terminal device triggers K beam sweeping processes for a target beam set within the first time period, indexes of K optimal transmit beams indicated by a beam measurement result are respectively $\{m_1, m_2, ... m_K\}$, and K L1-RSRP values corresponding to the optimal transmit beams are respectively $\{r_1, r_2, ... r_K\}$. Correspondingly, the AI model executes K prediction processes (or referred to as "online reasoning processes") within the first time period, indexes of K optimal transmit beams indicated by a prediction result are $\{m_1', m_2', ... m_K'\}$, and L1-RSRP values corresponding to the K optimal transmit beams are $\{r_1', r_2', ... r_K'\}$, where K is a positive integer greater than or equal to 1. Correspondingly, the link quality 1 is determined based on the K L1-RSRP values $\{r_1', r_2', ... r_K'\}$, and the link quality 2 is determined based on the K L1-RSRP values $\{r_1, r_2, ... r_K\}$.

Based on the determining manner 2, if the difference between the link quality 1 and the link quality 2 is greater than the difference threshold, the AI model is not appliable to a current wireless communication environment. Otherwise, if the difference between the link quality 1 and the link quality 2 is less than or equal to the difference threshold, the AI model is applicable to the current wireless communication environment.

In some implementations, for a terminal device or an application scenario that has a relatively loose requirement on a prediction result output by the AI model, a relatively large difference threshold may be configured, so that it is easier for the AI model to pass monitoring, and working efficiency of the AI model is improved. For a terminal device or an application scenario that has a relatively strict requirement on a prediction result output by the AI model, a relatively large difference threshold may be configured, to obtain more reliable link performance.

The terminal device that has a relatively loose requirement on the prediction result output by the AI model may include an IoT terminal device. Correspondingly, the terminal device that has a relatively strict requirement on the prediction result output by the AI model may include a vehicle-mounted terminal device, a mobile phone, or the like.

The application scenario may include a service type of a to-be-transmitted service. For example, the application scenario that has a relatively loose requirement on the prediction result output by the AI model may be a scenario in which a common service is transmitted. Correspondingly, an application scenario that has a relatively strict requirement on the prediction result output by the AI model may be a scenario in which an ultra-reliable and low-latency communications (ultra-reliable and low latency communications, URLLC) service is transmitted.

It should be noted that the determining manner 1 and the determining manner 2 may be used alone or in combination. For example, when the difference between the link quality 1 and the link quality 2 is greater than the difference threshold, and a quantity of mismatches is greater than a threshold of quantity of times, it may be determined that the accuracy of the prediction result output by the AI model is relatively low. Otherwise, when the difference between the link quality 1 and the link quality 2 is less than or equal to the difference threshold, or a quantity of mismatches is less than or equal to the threshold of quantity of times, it may be determined that the accuracy of the prediction result output by the AI model is relatively high.

Certainly, another determining manner may be applied to embodiments of this application. For example, an identifier of a beam indicated by the prediction result may be compared with a pre-configured beam, to determine the accuracy of the prediction result. For example, link quality indicated by the prediction result may be compared with a threshold, to determine the accuracy of the prediction result. This is not limited in embodiments of this application.

As described above, in the monitoring state, the accuracy of the prediction result may be determined based on a beam measurement result, and the beam measurement result may be obtained based on beam sweeping. Therefore, in some implementations, a network device may configure, for a terminal device, a time-frequency resource used for beam sweeping. That is, the network device transmits first configuration information to the terminal device, where the first configuration information is used to configure a time-frequency resource used for beam sweeping. The time-frequency resource used for beam sweeping may include a time-frequency resource occupied by a reference signal transmitted by using the beam.

In some cases, the terminal device may need to transmit a beam measurement result to the network device. Therefore, when configuring the time-frequency resource used for beam sweeping, the network device may also configure a time-frequency resource used to transmit the beam measurement result. Certainly, in this embodiment of this application, the two time-frequency resources may be separately configured by using different configuration information.

Generally, both the network device and the terminal device may need to learn of a monitoring result of the AI model. For example, the network device and the terminal device need to determine, based on the monitoring result, whether to perform beam sweeping. Therefore, in this embodiment of this application, if the AI model is deployed on the terminal device, the terminal device may transmit the monitoring result of the AI model to the network device. If the AI model is deployed on the network device, the network device may transmit the monitoring result of the AI model to the terminal device.

The foregoing describes a state of an AI model and a monitoring method. The following describes an applicable scope of an AI model based on different deployment manners of the AI model. A deployment manner of the AI model includes that the AI model is deployed on a network device or the AI model is deployed on a terminal device.

In some implementations, the AI model may be deployed on a network device. In this case, the AI model may be used to perform beam prediction for some or all of terminal devices in a cell. In this case, it may be understood that the AI model is a cell-specific (cell-specific) model shared by the terminal devices in the cell. Certainly, in this case, a plurality of AI models may be deployed on the network device, and different AI models may perform beam prediction for different terminal devices. This is not limited in embodiments of this application.

It should be noted that, in some scenarios, even if the AI model is a cell-specific model, a state change of the AI model is asynchronous for different terminal devices due to differences in wireless communication environments in which different terminal devices are located. That is, in this case, the state of the AI model may be terminal-specific, or in other words, UE-specific (ue-specific). For example, the AI model is cell-specific and model parameters of the AI model are synchronous for all the terminal devices. However, because channel changes of different terminal devices are different, monitoring results of the AI model may be slightly different. For a terminal device 1, if a monitoring result of a first time period indicates that a prediction result of the AI model is accurate, the AI model enters an active state from a monitoring state. For a terminal device 2, if a monitoring result of the first time period indicates that a prediction result of the AI model is inaccurate, the AI model enters an inactive state from the monitoring state.

Certainly, if a difference between wireless communications environments in which the terminal devices are located is not considered, the state of the AI model may also be cell-specific, that is, states of the AI model corresponding to the terminal devices in the cell may be the same.

In some other implementations, the AI model may be deployed on a terminal device. In this case, the AI model may be used to perform beam prediction for the terminal device. In this case, it may be understood that the AI model is terminal-specific or UE-specific. Correspondingly, the state of the AI model is also terminal-specific, or in other words, UE-specific.

It should be noted that, for the terminal-specific AI model, the terminal device may obtain a weight of the AI model from the network device. Certainly, the terminal device may train the AI model to obtain the terminal-specific AI model.

According to the applicable scope described above, the AI model may be cell-specific or UE-specific. Correspondingly, for AI models with different applicable scopes, online update processes of the AI models may be slightly different. If the AI model is cell-specific, the AI model needs to perform beam prediction for a plurality of terminal devices in the cell. Therefore, if the AI model is in the inactive state for one terminal or some terminal devices, the AI model may not be updated online. If the AI model is UE-specific and the AI model is in the inactive state for the terminal device, the AI model may be updated online.

In this embodiment of this application, training data used in training processes of AI models with different applicable scopes may also be different. If an AI model is a cell-specific model, training data of the AI model may include training data collected from all or some of the terminal devices in the cell. If an AI model is a UE-specific model, training data of the AI model may include local training data of the terminal device. For details on the training data, refer to the foregoing descriptions. For brevity, details are not described herein again.

The following describes an online training process of an AI model by using an example in which the AI model is a UE-specific model. In some implementations, for the UE-specific model, a weight of the AI model may be configured by a network device to simplify a training process. Certainly, to improve accuracy of a prediction result, the AI model may also be trained based on training data of a terminal device and a weight configured by the network device.

It is assumed that the AI model is deployed on the terminal device. The terminal device may obtain a plurality of beam measurement results for a beam set B in a monitoring state and/or an inactive state, use the plurality of beam measurement results as labels for prediction results for a beam set A, to construct a small-scale training data set used for fine-tuning (fine-tuning) of the AI model, and fine-tune the weight of the AI model by using the training data set. This is conductive to reducing a requirement on a computing capability of the terminal device for online updating of the AI model, and reducing a requirement on performance of the terminal device for online updating of the AI model. Certainly, if the requirement on the computing capability of the terminal device for online updating of the AI model is not considered, the terminal device may independently complete training of the AI model.

The foregoing describes a monitoring state of an AI model. The following describes two manners of entering the monitoring state according to an embodiment of this application. In a manner 1, the AI model may periodically enter the monitoring state. In a manner 2, the AI model may aperiodically enter the monitoring state.

Manner 1: The AI model may periodically enter the monitoring state.

Considering that wireless communication in which a terminal device is located may change, accuracy of a prediction result of the AI model is reduced. In this case, the AI model is configured to periodically enter the monitoring state. That is, the AI model may enter the monitoring state at intervals of T time units, where T is a positive integer greater than or equal to 1. In addition, a time unit may be understood as a period of time, which is not limited in embodiments of this application.

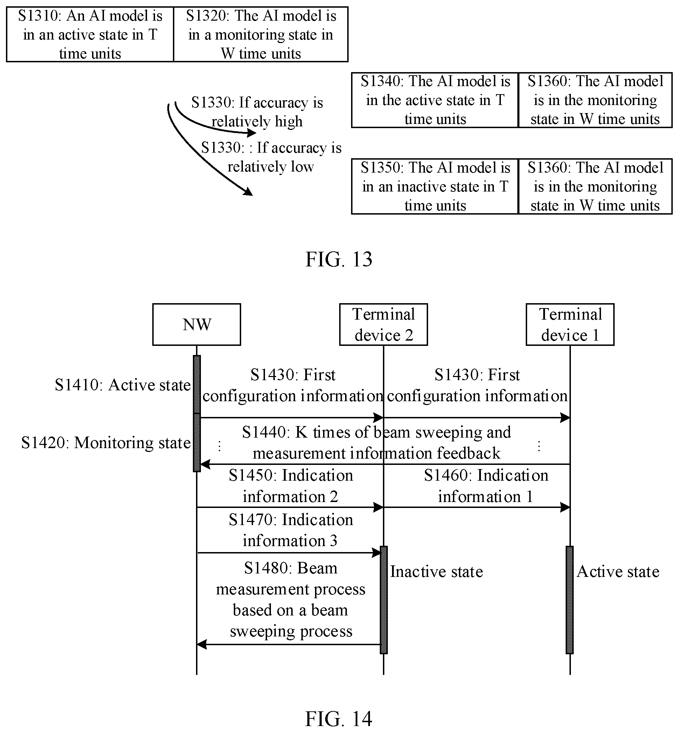

For ease of understanding, with reference to FIG. 13, the following describes a method for periodically entering a monitoring state by an AI model according to an embodiment of this application. The method shown in FIG. 13 includes step S1310 to step S1360.

In step S1310, the AI model maintains in an active state for T time units.

In some implementations, a prediction result output by the AI model in the active state may be directly used for beam pairing between a network device and a terminal device.

In step S1320, the AI model enters a monitoring state from the active state and maintains in the monitoring state for W time units, where W is a positive integer greater than or equal to 1.

In some implementations, the AI model may execute one prediction process in each time unit, and correspondingly, the AI model may execute a maximum of W prediction processes in the W time units. That is, in this case, the first time period mentioned above may be W time units. Correspondingly, K in the K prediction processes executed in the first time period is less than or equal to W, that is, $1 \leq K \leq W$.

In this case, K downlink beam sweeping processes for a beam set A may be triggered in W time units, indexes of K optimal transmit beams indicated by a beam measurement result are respectively $\{m_1, m_2...m_K\}$, and K L1-RSRP values corresponding to the optimal transmit beams are respectively $\{r_1, r_2...r_K\}$. Correspondingly, the AI model executes K prediction processes (or referred to as "online reasoning processes") in the W time units, indexes of K optimal transmit beams indicated by a prediction result are $\{m_1', m_2',...m_K'\}$, and L1-RSRP values corresponding to the K optimal transmit beams are $\{r_1', r_2'r_K'\}$, where K is a positive integer greater than or equal to 1.

In step S1330, a monitoring result is determined based on a beam measurement result and a prediction result.

If the monitoring result indicates that accuracy of the prediction result of the AI model is relatively high, step S1340 may be performed. Otherwise, if the monitoring result indicates that the accuracy of the prediction result of the AI model is relatively low, step S1350 may be performed.

It should be noted that, the prediction result may be determined based on the beam measurement result and any of the determining manners described above, to determine the monitoring result. For a specific manner, refer to the foregoing descriptions. For brevity, details are not described herein again.

In step S1340, the AI model enters the active state from the monitoring state and maintains in the active state for T time units.

Correspondingly, the AI model may continue to perform beam prediction in the T time units.

In step S1350, the AI model enters an inactive state from the monitoring state and maintains in the inactive state for T time units.

In some implementations, beam measurement may be performed on a target beam set in the T time units, to determine, based on a beam measurement result, a beam used for communication between a terminal device and a network device.

In addition, in some implementations, the AI model may also be trained online in the T time units, to update parameters of the AI model. Certainly, the AI model may not be trained online in the T time units.

It should be noted that after step S1340 or step S1350, the AI model may enter the monitoring state in a next period. Referring to step S1360, the AI model enters the monitoring state and maintains in the monitoring state for W time units.

In some implementations, one or more parameters of the time unit T, a length W of a monitoring time window, and a quantity K of times of monitoring may be configured in a manner of pre-defining or pre-configuration. Certainly, the foregoing parameter may also be configured by a network device. For example, the network device may configure the parameter by using radio resource control (radio resource control, RRC), a medium access control control element (medium access control control element, MAC CE), or downlink control information (downlink control information, DCI) signalling. Certainly, the network device may configure the parameter by using other signalling, which is not limited in embodiments of this application.

In some other implementations, the network device may further adjust the parameter. For example, the network device may configure a relatively small time unit T for a scenario in which a channel changes rapidly (for example, on a high rail). Otherwise, the network device may configure a relatively large time unit T for a scenario in which a channel changes slowly (for example, indoors).

As described above, the AI model may be deployed on a network device or a terminal device. For the two deployment manners, the following separately describes a procedure of periodically entering a monitoring state by an AI model.

FIG. 14 describes a procedure of periodically entering a monitoring state by an AI model by using an example in which the AI model is deployed on a network device. It should be noted that FIG. 14 focuses on a procedure of interaction between the network device and a terminal device. For terms involved and a specific determining manner, refer to the foregoing descriptions. For brevity, details are not described in the following.

It is assumed that the AI model is a cell-specific model. The method shown in FIG. 14 includes step S1410 to step S1480.

In step S1410, the AI model is currently in an active state.

In some implementations, still referring to FIG. 13, the AI model is in the active state for both a terminal device 1 and a terminal device 2 in a cell, and maintains in the active state for T time units.

In step S1420, in a monitoring time window, the AI model enters a monitoring state from the active state.

The monitoring time window is periodically configured, and correspondingly, the AI model periodically enters the monitoring state in the monitoring time window. Still referring to FIG. 13, a length of the monitoring time window may be W time units.

In step S1430, the network device separately transmits first configuration information to the terminal device 1 and the terminal device 2, where the first configuration information is used to configure a time-frequency resource used for beam sweeping and a time-frequency resource used to transmit a beam measurement result.

In some implementations, the time-frequency resource used for beam sweeping may include a time-frequency resource used by the terminal device 1 to perform K times of beam sweeping and a time-frequency resource used by the terminal device 2 to perform K times of beam sweeping. Correspondingly, the time-frequency resource used to transmit the beam measurement result includes a time-frequency resource used by the terminal device 1 to report K beam measurement results, and a time-frequency resource used by the terminal device 2 to report K beam measurement results.

In step S1440, the network device monitors a prediction result of the AI model in the monitoring state.

In some implementations, the terminal device 1 performs K times of beam sweeping on the time-frequency resource used for the K times of beam sweeping, and transmits a beam measurement result 1 to the network device. Correspondingly, the network device monitors, by using the beam measurement result 1 of beam sweeping, K prediction results 1 of the AI model for the terminal device 1, and obtains a monitoring result 1. The monitoring result 1 indicates that the prediction result of the AI model is accurate for the terminal device 1.

Correspondingly, the terminal device 2 performs K times of beam sweeping on the time-frequency resource used for the K times of beam sweeping, and transmits a beam measurement result 2 to the network device. Correspondingly, the network device monitors, by using the beam measurement result 2 of beam sweeping, K prediction results 2 of the AI model for the terminal device 2, and obtains a monitoring result 2. The monitoring result 2 indicates that the prediction result of the AI model is inaccurate for the terminal device 2.

In step S1450, the network device transmits indication information 1 to the terminal device 1, to indicate that the AI model enters the active state.

Correspondingly, still referring to FIG. 13, for the terminal device 1, the AI model enters the active state from the monitoring state and maintains in the active state for T time units.

In step S1460, the network device transmits indication information 2 to the terminal device 2, to indicate that the AI model enters an inactive state.

Correspondingly, still referring to FIG. 13, for the terminal device 2, the AI model enters the inactive state from the monitoring state and maintains in the inactive state for T time units.

In step S1470, the network device transmits indication information 3 to the terminal device 2, where the indication information 3 is used to trigger the terminal device 2 to execute a beam measurement process based on beam sweeping (for example, the beam measurement process described above).

In step S1480, the terminal device 2 enters the beam measurement process based on beam sweeping.

It should be noted that the AI model is deployed on the network device and is a cell-specific (or cell-sharing) model. If the AI model enters the inactive state for a terminal device or some terminal devices in the cell, and online updating of the model is performed for the terminal device or the terminal devices, a weight of the updated AI model may no longer applicable to a terminal device corresponding to the active state of the original AI model. That is, for the terminal device 2, when the AI model is in the inactive state, the AI model is updated online in this case, but the updated AI model may no longer applicable to the terminal device 1. Therefore, in this embodiment of this application, in the foregoing case, the AI model may not be updated online.

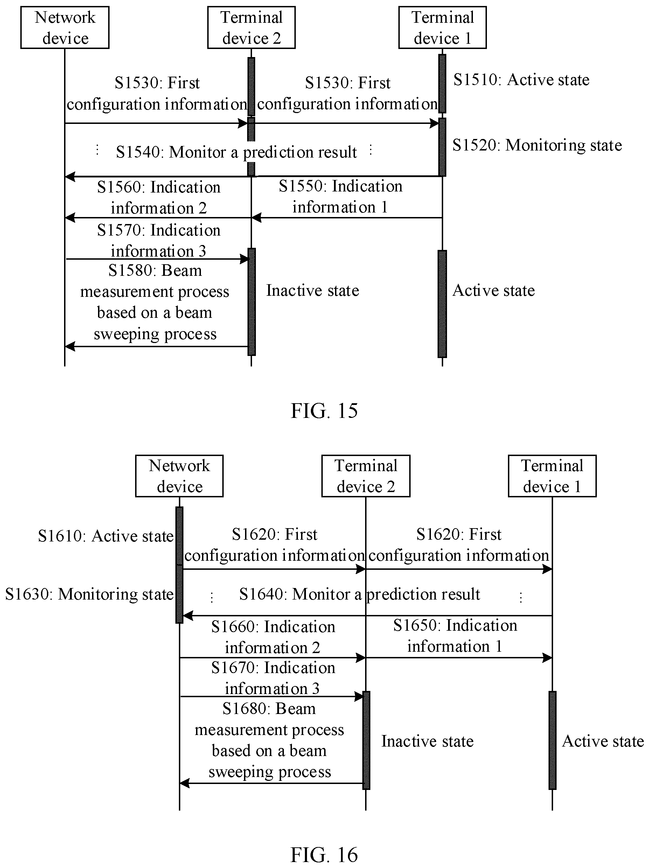

FIG. 15 describes a procedure of periodically entering a monitoring state by an AI model by using an example in which the AI model is deployed on a terminal device. It should be noted that FIG. 15 focuses on a procedure of interaction between a network device and the terminal device. For terms involved and a specific determining manner, refer to the foregoing descriptions. For brevity, details are not described in the following.

It is assumed that an AI model is a UE-specific model, an AI model 1 is deployed on a terminal device 1, and an AI model 2 is deployed on a terminal device 2. The method shown in FIG. 15 includes step S1510 to step S1580.

In step S1510, the AI model 1 and the AI model 2 are currently in an active state.

In some implementations, still referring to FIG. 13, the AI model 1 and the AI model 2 maintain in the active state for T time units.

In step S1520, in a monitoring time window, the AI model 1 and the AI model 2 enter a monitoring state from the active state.

The monitoring time window is periodically configured, and correspondingly, the AI model 1 and the AI model 2 periodically enter the monitoring state in the monitoring time window. Still referring to FIG. 13, a length of the monitoring time window may be W time units.

In step S1530, the network device separately transmits first configuration information to the terminal device 1 and the terminal device 2, where the first configuration information is used to configure a time-frequency resource used for beam sweeping and a time-frequency resource used to transmit a beam measurement result.

In some implementations, the time-frequency resource used for beam sweeping may include a time-frequency resource used by the terminal device 1 to perform K times of beam sweeping and a time-frequency resource used by the terminal device 2 to perform K times of beam sweeping. Correspondingly, the time-frequency resource used to transmit the beam measurement result includes a time-frequency resource used by the terminal device 1 to report K beam measurement results, and a time-frequency resource used by the terminal device 2 to report K beam measurement results.

In step S1540, the terminal device 1 and the terminal device 2 separately monitor prediction results of the AI model 1 and the AI model 2 in the monitoring state.

In some implementations, the terminal device 1 performs K times of beam sweeping on the time-frequency resource used for the K times of beam sweeping, monitors, by using the beam measurement result 1 of beam sweeping, K prediction results 1 of the AI model 1, and obtains a monitoring result 1. The monitoring result 1 indicates that a prediction result of the AI model 1 is accurate for the terminal device 1.

Correspondingly, the terminal device 2 performs K times of beam sweeping on the time-frequency resource used for the K times of beam sweeping, monitors, by using the beam measurement result 2 of beam sweeping, K prediction results 2 of the AI model for the terminal device 2, and obtains a monitoring result 2. The monitoring result 2 indicates that a prediction result of the AI model 2 is inaccurate.

In step S1550, the terminal device 1 transmits indication information 1 to the network device, to indicate that the AI model 1 enters the active state.

Correspondingly, still referring to FIG. 13, for the terminal device 1, the AI model 1 enters the active state from the monitoring state and maintains in the active state for T time units.

In step S1560, the terminal device 2 transmits indication information 2 to the network device, to indicate that the AI model 2 enters an inactive state.

Correspondingly, still referring to FIG. 13, for the terminal device 2, the AI model 2 enters the inactive state from the monitoring state and maintains in the inactive state for T time units.

In some implementations, for the terminal device 2, after the AI model 2 enters the inactive state, the terminal device 2 may update the AI model online, so that the AI model 2 can enter the active state after a monitoring state in a next period. For a specific online updating manner, refer to the foregoing descriptions. For brevity, details are not described herein again.

In step S1570, the network device transmits indication information 3 to the terminal device 2, where the indication information 3 is used to trigger the terminal device 2 to execute a beam measurement process based on beam sweeping (for example, the beam measurement process described above).

In step S1580, the terminal device 2 enters the beam measurement process based on beam sweeping.

It should be noted that in this embodiment of this application, because the AI models are UE-specific, weights of the AI models may be different for different terminal devices. Certainly, in this embodiment of this application, weights of the AI models for different terminal devices may be the same, which is not limited in embodiments of this application.

In this embodiment of this application, the AI model may periodically enter the monitoring state, which is conductive to reducing a transmission resource required for transmitting indication information indicating the AI model enters the monitoring state.

With reference to FIG. 13 to FIG. 15, the foregoing describes methods for periodically entering a monitoring state by an AI model according to embodiments of this application. With reference to FIG. 16 to FIG. 19, the following describes methods for aperiodically entering a monitoring state by an AI model.

Manner 2: The AI model may aperiodically enter the monitoring state.

To improve flexibility of monitoring on the AI model, a network device or a terminal device may trigger the AI model to enter the monitoring state.

In some implementations, the network device may instruct the terminal device to trigger the AI model to enter the monitoring state. Certainly, the terminal device may instruct the network device to trigger the AI model to enter the monitoring state. Alternatively, the terminal device may autonomously trigger the AI model to enter the monitoring state. Alternatively, the network device may autonomously trigger the AI model to enter the monitoring state. A specific manner in which the AI model enters the monitoring state is not limited in embodiments of this application.

If the network device instructs the terminal device to trigger the AI model to enter the monitoring state, indication information (also referred to as "first indication information") may be carried in a MAC CE or DCI. Certainly, the indication information may also be carried in other information, which is not limited in embodiments of this application.

In embodiments of this application, duration W in which the AI model is in the monitoring state and/or a quantity K of times of prediction executed by the AI model in the monitoring state may be pre-defined in a protocol, or may be configured by the network device. In some implementations, when transmitting first configuration information, the network device may configure one or more parameters by using the first configuration information. Certainly, the network device may transmit dedicated configuration information to configure the one or more parameters.

In some other implementations, the network device may not configure the duration W for the monitoring state. In this case indication information (for example, the indication information 1 or the indication information 2 described above) for instructing, by the network device, the terminal device to switch a state of the AI model, may be used to instruct the AI model to end the monitoring state and enter the active state or the inactive state from the monitoring state.

In addition, the network device may not configure the quantity K of times of prediction, and this parameter may be implemented by the terminal device.

In embodiments of this application, a condition for triggering the AI model to enter the monitoring state is not limited. In some implementations, after detecting that a wireless communication environment changes, the terminal device or the network device may trigger the AI model to enter the monitoring state. Change of the wireless communications environment may include a relatively large moving distance of the terminal device, a relatively fast moving speed of the terminal device, or the like. In some other implementations, the AI model may be triggered to enter the monitoring state based on quality of a link between the network device and the terminal device. For example, when the quality of the link between the network device and the terminal device is relatively poor within a period of time, and/or a quantity of failures in communication between the terminal device and the network device is relatively large, the AI model may be triggered to enter the monitoring state. In some other implementations, the AI model may be triggered to enter the monitoring state based on duration in which the AI model is in the active state or the inactive state. For example, when the AI model is in the inactive state for a relatively long time, the AI model may be triggered to enter the monitoring state.

FIG. 16 describes a procedure of aperiodically entering a monitoring state by an AI model by using an example in which the AI model is deployed on a network device. It should be noted that FIG. 16 focuses on a procedure of interaction between the network device and a terminal device. For terms involved and a specific determining manner, refer to the foregoing descriptions. For brevity, details are not described in the following.

It is assumed that the AI model is a cell-specific model. The method shown in FIG. 16 includes step S1610 to step S1680.

In step S1610, the AI model is currently in an active state.

In some implementations, the AI model is in the active state for both a terminal device 1 and a terminal device 2 in a cell. In embodiments of this application, a time in which the AI model is in the active state is not limited.

In step S1620, the network device separately transmits first configuration information to the terminal device 1 and the terminal device 2, where the first configuration information is used to configure a time-frequency resource used for beam sweeping and a time-frequency resource used to transmit a beam measurement result, and is used to trigger the AI model to enter a monitoring state.

In some implementations, the time-frequency resource used for beam sweeping may include a time-frequency resource used by the terminal device 1 to perform K times of beam sweeping and a time-frequency resource used by the terminal device 2 to perform K times of beam sweeping. Correspondingly, the time-frequency resource used to transmit the beam measurement result includes a time-frequency resource used by the terminal device 1 to report K beam measurement results, and a time-frequency resource used by the terminal device 2 to report K beam measurement results.

In step S1630, in response to the first configuration information, the AI model enters the monitoring state from the active state.

In step S1640, the network device monitors a prediction result of the AI model in the monitoring state.

In some implementations, the terminal device 1 performs K times of beam sweeping on the time-frequency resource used for the K times of beam sweeping, and transmits a beam measurement result 1 to the network device. Correspondingly, the network device monitors, by using the beam measurement result 1 of beam sweeping, K prediction results 1 of the AI model for the terminal device 1, and obtains a monitoring result 1. The monitoring result 1 indicates that the prediction result of the AI model is accurate for the terminal device 1.

Correspondingly, the terminal device 2 performs K times of beam sweeping on the time-frequency resource used for the K times of beam sweeping, and transmits a beam measurement result 2 to the network device. Correspondingly, the network device monitors, by using the beam measurement result 2 of beam sweeping, K prediction results 2 of the AI model for the terminal device 2, and obtains a monitoring result 2. The monitoring result 2 indicates that the prediction result of the AI model is inaccurate for the terminal device 2.

In step S1650, the network device transmits indication information 1 to the terminal device 1, to indicate that the AI model enters the active state.

In some implementations, the indication information 1 is further used to indicate, to the terminal device 1, that the monitoring state of the AI model ends.

In step S1660, the network device transmits indication information 2 to the terminal device 2, to indicate that the AI model enters an inactive state.

In some implementations, the indication information 2 is further used to indicate, to the terminal device 2, that the monitoring state of the AI model ends.

In step S1670, the network device transmits indication information 3 to the terminal device 2, where the indication information 3 is used to trigger the terminal device 2 to execute a beam measurement process based on beam sweeping (for example, the beam measurement process described above).

In step S1680, the terminal device 2 enters the beam measurement process based on beam sweeping.

It should be noted that the AI model is deployed on the network device and is a cell-specific (or cell-sharing) model. If the AI model enters the inactive state for a terminal device or some terminal devices in the cell, and online updating of the model is performed for the terminal device or terminal devices, a weight of the updated AI model may no longer applicable to a terminal device corresponding to the active state of the original AI model. That is, for the terminal device 2, when the AI model is in the inactive state, if the AI model is updated online in this case, the updated AI model may no longer applicable to the terminal device 1. Therefore, in this embodiment of this application, in the foregoing case, the AI model may not be updated online.

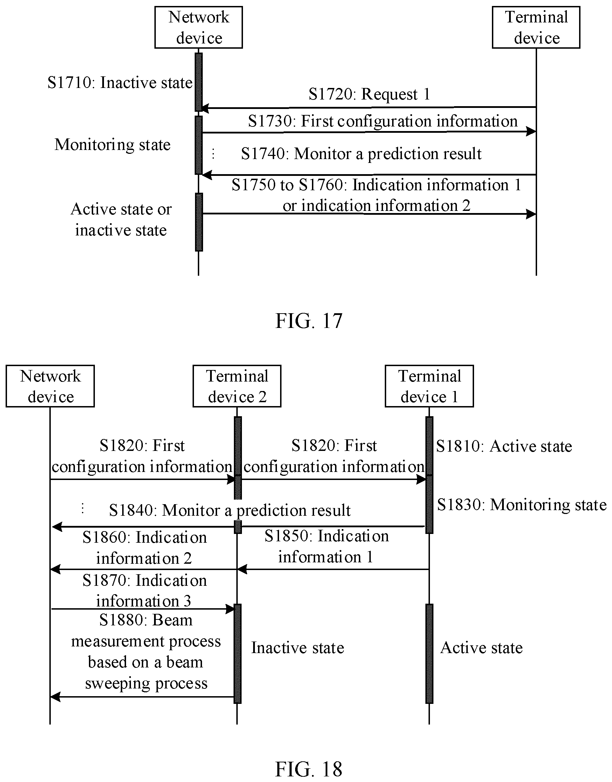

FIG. 16 describes a method according to an embodiment of this application by using an example in which a network device triggers an AI model to enter a monitoring state. With reference to FIG. 17, the following uses an example in which a terminal device triggers an AI model to enter a monitoring state for description.

It is assumed that the AI model is a cell-specific model. The method shown in FIG. 17 includes step S1710 to step S1780.

In step S1710, for a terminal device 1, the AI model is currently in an inactive state.

In step S1720, the terminal device transmits a request 1 to a network device, to request the AI model to enter a monitoring state.

In step S1730, in response to the request 1, the network device transmits first configuration information to the terminal device 1, where the first configuration information is used to configure a time-frequency resource used for beam sweeping and a time-frequency resource used to transmit a beam measurement result.

In step S1740, the network device monitors a prediction result of the AI model in the monitoring state.

In some implementations, the terminal device 1 performs K times of beam sweeping on the time-frequency resource used for the K times of beam sweeping, and transmits a beam measurement result 1 to the network device. Correspondingly, the network device monitors, by using the beam measurement result 1 of beam sweeping, K prediction results 1 of the AI model for the terminal device 1, and obtains a monitoring result 1. The monitoring result 1 is used to indicate accuracy of the prediction result of the AI model for the terminal device 1.

In step S1750, if the monitoring result indicates that the prediction result of the AI model is accurate, the network device transmits indication information 1 to the terminal device 1, to indicate that the AI model enters an active state.

In some implementations, the indication information 1 is further used to indicate, to the terminal device 1, that the monitoring state of the AI model ends.

In step S1760, if the monitoring result indicates that the prediction result of the AI model is inaccurate, the network device transmits indication information 2 to the terminal device 1, to indicate that the AI model enters the inactive state.

In some implementations, the indication information 2 is further used to indicate, to the terminal device 2, that the monitoring state of the AI model ends.

FIG. 18 describes a procedure of aperiodically entering a monitoring state by an AI model by using an example in which the AI model is deployed on a network device. It should be noted that FIG. 18 focuses on a procedure of interaction between the network device and a terminal device. For terms involved and a specific determining manner, refer to the foregoing descriptions. For brevity, details are not described in the following.

It is assumed that the AI model is a UE-specific model, an AI model 1 is deployed on a terminal device 1, and an AI model 2 is deployed on a terminal device 2. The method shown in FIG. 18 includes step S1810 to step S1880.

In step S1810, the AI model 1 and the AI model 2 are currently in an active state.

In some implementations, the AI model 1 and the AI model 2 are in the active state and maintains in the active state for T time units.

In step S1820, the network device separately transmits first configuration information to the terminal device 1 and the terminal device 2, where the first configuration information is used to configure a time-frequency resource used for beam sweeping and a time-frequency resource used to transmit a beam measurement result, and is used to separately trigger the AI model 1 and the AI model 2 to enter a monitoring state.

In some implementations, the time-frequency resource used for beam sweeping may include a time-frequency resource used by the terminal device 1 to perform K times of beam sweeping and a time-frequency resource used by the terminal device 2 to perform K times of beam sweeping. Correspondingly, the time-frequency resource used to transmit the beam measurement result includes a time-frequency resource used by the terminal device 1 to report K beam measurement results, and a time-frequency resource used by the terminal device 2 to report K beam measurement results.

In step S1830, in response to the first configuration information, the AI model 1 and the AI model 2 enter the monitoring state from the active state.

In step S1840, the terminal device 1 and the terminal device 2 separately monitor prediction results of the AI model 1 and the AI model 2 in the monitoring state.

In some implementations, the terminal device 1 performs K times of beam sweeping on the time-frequency resource used for the K times of beam sweeping, monitors, by using the beam measurement result 1 of beam sweeping, K prediction results 1 of the AI model 1, and obtains a monitoring result 1. The monitoring result 1 indicates that a prediction result of the AI model 1 is accurate for the terminal device 1.

Correspondingly, the terminal device 2 performs K times of beam sweeping on the time-frequency resource used for the K times of beam sweeping, monitors, by using the beam measurement result 2 of beam sweeping, K prediction results 2 of the AI model for the terminal device 2, and obtains a monitoring result 2. The monitoring result 2 indicates that a prediction result of the AI model 2 is inaccurate.

In step S1850, the terminal device 1 transmits indication information 1 to the network device, to indicate that the AI model 1 enters the active state.

In some implementations, the indication information 1 is further used to indicate that the monitoring state of the AI model ends.

In step S1860, the terminal device 2 transmits indication information 2 to the network device, to indicate that the AI model 2 enters an inactive state.

In some implementations, the indication information 2 is further used to indicate that the monitoring state of the AI model ends.

In some implementations, for the terminal device 2, after the AI model 2 enters the inactive state, the terminal device 2 may update the AI model online, so that the AI model 2 can enter the active state after a next aperiodical monitoring state. For a specific online updating manner, refer to the foregoing descriptions. For brevity, details are not described herein again.

In step S1870, the network device transmits indication information 3 to the terminal device 2, where the indication information 3 is used to trigger the terminal device 2 to execute a beam measurement process based on beam sweeping (for example, the beam measurement process described above).

In step S1880, the terminal device 2 enters the beam measurement process based on beam sweeping.

It should be noted that in this embodiment of this application, because the AI models are UE-specific, weights of the AI models may be different for different terminal devices. Certainly, in this embodiment of this application, weights of the AI models for different terminal devices may also be the same, which is not limited in embodiments of this application.

In this embodiment of this application, the AI model may aperiodically enter the monitoring state, which is conductive to reducing a transmission resource required for transmitting indication information indicating that the AI model enters the monitoring state.

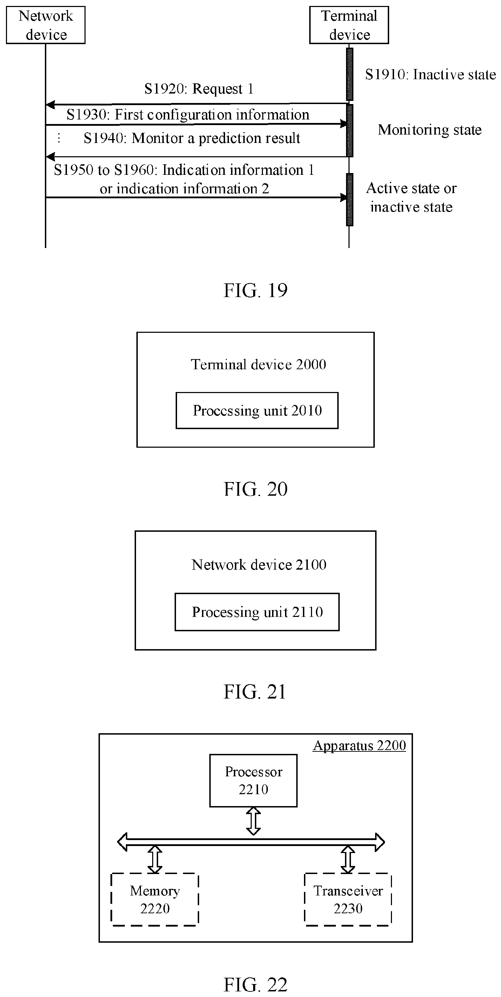

FIG. 18 describes a method in an embodiment of this application by using an example in which a network device triggers an AI model to enter a monitoring state. With reference to FIG. 19, the following uses an example in which a terminal device triggers an AI model to enter a monitoring state for description.

It is assumed that the AI model is a UE-specific model. The method shown in FIG. 19 includes step S1910 to step S1980.

In step S1910, for a terminal device 1, the AI model is currently in an inactive state.

In step S1920, the terminal device transmits a request 1 to a network device, to request the AI model to enter a monitoring state.

In step S1930, in response to the request 1, the network device transmits first configuration information to the terminal device 1, where the first configuration information is used to configure a time-frequency resource used for beam sweeping and a time-frequency resource used to transmit a beam measurement result.

In step S1940, the terminal device monitors a prediction result of the AI model in the monitoring state.

In some implementations, the terminal device 1 performs K times of beam sweeping on the time-frequency resource used for the K times of beam sweeping, monitors, by using the beam measurement result 1 of beam sweeping, K prediction results 1 of the AI model for the terminal device 1, and obtains a monitoring result 1. The monitoring result 1 is used to indicate accuracy of a prediction result of the AI model for the terminal device 1.

In step S1950, if the monitoring result indicates that the prediction result of the AI model is accurate, the terminal device 1 transmits indication information 1 to the network device, to indicate that the AI model enters an active state.

In some implementations, the indication information 1 is further used to indicate, to the terminal device 1, that the monitoring state of the AI model ends.

In step S1960, if the monitoring result indicates that the prediction result of the AI model is inaccurate, the terminal device 1 transmits indication information 2 to the network device, to indicate that the AI model enters the inactive state.

In some implementations, the indication information 2 is further used to indicate, to the terminal device 2, that the monitoring state of the AI model ends.

It should be noted that, in the one or more embodiments described with reference to FIG. 14 to FIG. 19, the indication information 1 and the indication information 2 may be simultaneously transmitted. Certainly, the indication information 1 and the indication information 2 may not be simultaneously transmitted, which is not limited in embodiments of this application.

In addition, in the foregoing embodiments, the indication information 3 may be the same as the indication information 1, that is, when indicating that the AI model enters the inactive state, the indication information 1 also indicates that a beam measurement process based on beam sweeping is triggered. Certainly, in the foregoing embodiments, the indication information 3 may also be different from the indication information 1.

With reference to FIG. 1 to FIG. 19, the foregoing describes method embodiments of this application in detail. With reference to FIG. 20 to FIG. 22, the following describes apparatus embodiments of this application in detail. It should be understood that the descriptions of the method embodiments correspond to the descriptions of the apparatus embodiments, and therefore, for parts that are not described in detail, refer to the foregoing method embodiments.

FIG. 20 is a schematic diagram of a terminal device according to an embodiment of this application. The terminal device 2000 shown in FIG. 20 includes a processing unit 2010.

The processing unit 2010 is configured to determine a state of a first model, where the first model is used to perform beam prediction for a target beam set, and the state of the first model includes one or more of an active state, an inactive state, or a monitoring state, where the monitoring state is used to determine a monitoring result of the first model, and the monitoring result is used to indicate accuracy of a prediction result of the first model.

In a possible implementation, in the monitoring state, the accuracy of the prediction result of the first model is determined based on a beam measurement result of the target beam set.

In a possible implementation, the accuracy of the prediction result of the first model is determined based on one or more of the following: a quantity of times that a beam indicated by the prediction result does not match a beam indicated by the beam measurement result within a first time period; or a difference between link quality corresponding to the beam indicated by the prediction result and link quality corresponding to the beam indicated by the beam measurement result within the first time period.

In a possible implementation, if the quantity of times that the beam indicated by the prediction result does not match the beam indicated by the beam measurement result within the first time period is greater than a first threshold, the processing unit determines that the prediction result of the first model is inaccurate; or if the quantity of times that the beam indicated by the prediction result does not match the beam indicated by the beam measurement result within the first time period is less than or equal to the first threshold, the processing unit determines that the prediction result of the first model is accurate.

In a possible implementation, if the difference between the link quality corresponding to the beam indicated by the prediction result and the link quality corresponding to the beam indicated by the beam measurement result within the first time period is greater than a second threshold, the processing unit determines that the prediction result of the first model is inaccurate; or if the difference between the link quality corresponding to the beam indicated by the prediction result and the link quality corresponding to the beam indicated by the beam measurement result within the first time period is less than or equal to the second threshold, the processing unit determines that the prediction result of the first model is accurate.

In a possible implementation, the beam measurement result of the target beam set is determined based on a manner of beam sweeping.

In a possible implementation, the terminal device further includes a first receiving unit, configured to receive first configuration information transmitted by a network device, where the first configuration information is used to configure a time-frequency resource used for the beam sweeping, and/or the first configuration information is used to configure a time-frequency resource used to transmit the beam measurement result.

In a possible implementation, in the inactive state, beam management is performed on the target beam set based on a manner of beam sweeping.

In a possible implementation, the first model periodically enters the monitoring state.

In a possible implementation, the first model aperiodically enters the monitoring state.

In a possible implementation, the terminal device further includes a second receiving unit, configured to receive first indication information transmitted by a network device, where the first indication information is used to instruct the terminal device to trigger the first model to enter the monitoring state; or the terminal device autonomously triggers the first model to enter the monitoring state.

In a possible implementation, the processing unit is further configured to: if the monitoring result indicates that the prediction result of the first model is accurate, determine that the first model enters the active state from the monitoring state; and/or if the monitoring result indicates that the prediction result of the first model is inaccurate, determine that the first model enters the inactive state from the monitoring state.

In a possible implementation, a transmitting unit is configured to: if the first model is deployed on the terminal device, transmit the monitoring result of the first model to a network device; or a third receiving unit is configured to: if the first model is deployed on a network device, receive the monitoring result of the first model that is transmitted by the network device.

In a possible implementation, a fourth receiving unit is configured to receive second configuration information transmitted by a network device, where the second configuration information is used to configure duration of a first time window, and the first time window indicates a time period within which the first model is in the monitoring state; and/or the second configuration information is used to configure a quantity of times that the accuracy of the prediction result of the first model is monitored within the first time window.

In a possible implementation, duration of a first time window within which the monitoring state lasts and/or a quantity of times of monitoring within the first time window are indicated in a manner of pre-configuration, where the first time window indicates a time period within which the first model is in the monitoring state, and the quantity of times of monitoring is a quantity of times that the accuracy of the prediction result of the first model is monitored within the first time window.

In a possible implementation, if the first model is deployed on the terminal device, the first model is used to perform beam prediction for the terminal device; or if the first model is deployed on a network device, the first model is used to perform beam prediction for some or all of terminal devices in a cell.

FIG. 21 is a schematic diagram of a network device according to an embodiment of this application.

The network device shown in FIG. 21 includes a processing unit 2110.

The processing unit 2110 is configured to determine a state of a first model, where the first model is used to perform beam prediction for a target beam set, and the state of the first model includes one or more of an active state, an inactive state, or a monitoring state, where the monitoring state is used to determine a monitoring result of the first model, and the monitoring result is used to indicate accuracy of a prediction result of the first model.

In a possible implementation, in the monitoring state, the accuracy of the prediction result of the first model is determined based on a beam measurement result of the target beam set.

In a possible implementation, the accuracy of the prediction result of the first model is determined based on one or more of the following: a quantity of times that a beam indicated by the prediction result does not match a beam indicated by the beam measurement result within a first time period; or a difference between link quality corresponding to the beam indicated by the prediction result and link quality corresponding to the beam indicated by the beam measurement result within the first time period.

In a possible implementation, if the quantity of times that the beam indicated by the prediction result does not match the beam indicated by the beam measurement result within the first time period is greater than a first threshold, the processing unit determines that the prediction result of the first model is inaccurate; or if the quantity of times that the beam indicated by the prediction result does not match the beam indicated by the beam measurement result within the first time period is less than or equal to the first threshold, the processing unit determines that the prediction result of the first model is accurate.

In a possible implementation, if the difference between the link quality corresponding to the beam indicated by the prediction result and the link quality corresponding to the beam indicated by the beam measurement result within the first time period is greater than a second threshold, the processing unit determines that the prediction result of the first model is inaccurate; or if the difference between the link quality corresponding to the beam indicated by the prediction result and the link quality corresponding to the beam indicated by the beam measurement result within the first time period is less than or equal to the second threshold, the processing unit determines that the prediction result of the first model is accurate.

In a possible implementation, the beam measurement result of the target beam set is determined based on a manner of beam sweeping.

In a possible implementation, the network device further includes a first transmitting unit, configured to transmit first configuration information to a terminal device, where the first configuration information indicates a time-frequency resource used for the beam sweeping, and/or the first configuration information indicates a time-frequency resource used to transmit the beam measurement result.

In a possible implementation, in the inactive state, beam management is performed on the target beam set based on a manner of beam sweeping.

In a possible implementation, the first model periodically enters the monitoring state.

In a possible implementation, the first model aperiodically enters the monitoring state.

In a possible implementation, the network device further includes a second transmitting unit, configured to transmit first indication information to a terminal device, where the first indication information is used to instruct the terminal device to trigger the first model to enter the monitoring state; or the terminal device autonomously triggers the first model to enter the monitoring state.

In a possible implementation, the processing unit is further configured to: if the monitoring result indicates that the prediction result of the first model is accurate, determine that the first model enters the active state from the monitoring state; and/or if the monitoring result indicates that the prediction result of the first model is inaccurate, determine that the first model enters the inactive state from the monitoring state.

In a possible implementation, a first receiving unit is configured to: if the first model is deployed on a terminal device, receive the monitoring result of the first model that is transmitted by the terminal device; or a third transmitting unit is configured to: if the first model is deployed on the network device, transmit the monitoring result of the first model to a terminal device.

In a possible implementation, the network device further includes a fourth transmitting unit, configured to transmit second configuration information to a terminal device, where the second configuration information is used to configure duration of a first time window, and the first time window indicates a time period within which the first model is in the monitoring state; and/or the second configuration information is used to configure a quantity of times that the accuracy of the prediction result of the first model is monitored within the first time window.

In a possible implementation, duration of a first time window within which the monitoring state lasts and/or a quantity of times of monitoring within the first time window are indicated in a manner of pre-configuration, where the first time window indicates a time period within which the first model is in the monitoring state, and the quantity of times of monitoring is a quantity of times that the accuracy of the prediction result of the first model is monitored within the first time window.

In a possible implementation, if the first model is deployed on the terminal device, the first model is used to perform beam prediction for the terminal device; or if the first model is deployed on a network device, the first model is used to perform beam prediction for some or all of terminal devices in a cell.

In an optional embodiment, the processing unit 2010 may be a processor 2210. The terminal device 2000 may further include a transceiver 2230 and a memory 2220, which are specifically shown in FIG. 22.

In an optional embodiment, the processing unit 2110 may be a processor 2210. The network device 2100 may further include a transceiver 2230 and a memory 2220, which are specifically shown in FIG. 22.

FIG. 22 is a schematic structural diagram of a communications apparatus according to an embodiment of this application. The dashed lines in FIG. 22 indicate that the unit or module is optional. The apparatus 2200 may be configured to implement a method described in the foregoing method embodiments. The apparatus 2200 may be a chip, a terminal device, or a network device.

The apparatus 2200 may include one or more processors 2210. The processor 2210 may allow the apparatus 2200 to implement a method described in the foregoing method embodiments. The processor 2210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2200 may further include one or more memories 2220. The memory 2220 stores a program, where the program may be executed by the processor 2210, to cause the processor 2210 to execute a method described in the foregoing method embodiments. The memory 2220 may be separate from the processor 2210 or may be integrated into the processor 2210.

The apparatus 2200 may further include a transceiver 2230. The processor 2210 may communicate with another device or chip by using the transceiver 2230. For example, the processor 2210 may transmit data to and receive data from another device or chip by using the transceiver 2230.

An embodiment of this application further provides a computer-readable storage medium for storing a program. The computer-readable storage medium may be applied to a terminal or a network device provided in embodiments of this application, and the program causes a computer to execute a method executed by the terminal or the network device in various embodiments of this application.

An embodiment of this application further provides a computer program product. The computer program product includes a program. The computer program product may be applied to a terminal or a network device provided in embodiments of this application, and the program causes a computer to execute a method executed by the terminal or the network device in various embodiments of this application.

An embodiment of this application further provides a computer program. The computer program may be applied to a terminal or a network device provided in embodiments of this application, and the computer program causes a computer to execute a method executed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

In embodiments of this application, the "indication" mentioned may be a direct indication or an indirect indication, or may indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In embodiments of this application, "B corresponding to A" means that B is associated with A, and B may be determined based on A. However, it should also be understood that, determining B based on A does not mean determining B based only on A. Instead, B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefining" and "pre-configuration" may be implemented by pre-storing a corresponding code or table in a device (for example, including the terminal device and the network device) or in other manners that can be used for indicating related information, and a specific implementation thereof is not limited in this application. For example, pre-defining may refer to being defined in a protocol.

In embodiments of this application, the "protocol" may refer to a standard protocol in the communication field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A beam management method, comprising:

    determining, by a terminal device, a state of a first model, wherein
    the first model is used to perform beam prediction for a target beam set, and the state of the first model comprises one or more of an active state, an inactive state, or a monitoring state, wherein the monitoring state is used to determine a monitoring result of the first model, and the monitoring result is used to indicate accuracy of a prediction result of the first model.

2.  The method according to claim 1, wherein in the monitoring state, the accuracy of the prediction result of the first model is determined based on a beam measurement result of the target beam set.

3.  The method according to claim 2, wherein the accuracy of the prediction result of the first model is determined based on one or more of following:

    a quantity of times that a beam indicated by the prediction result does not match a beam indicated by the beam measurement result within a first time period; or
    a difference between link quality corresponding to the beam indicated by the prediction result and link quality corresponding to the beam indicated by the beam measurement result within the first time period.

4.  The method according to claim 3, wherein the method further comprises:

    if the quantity of times that the beam indicated by the prediction result does not match the beam indicated by the beam measurement result within the first time period is greater than a first threshold, determining, by the terminal device, that the prediction result of the first model is inaccurate; or
    if the quantity of times that the beam indicated by the prediction result does not match the beam indicated by the beam measurement result within the first time period is less than or equal to the first threshold, determining, by the terminal device, that the prediction result of the first model is accurate.

5.  The method according to claim 3, wherein the method further comprises:

    if the difference between the link quality corresponding to the beam indicated by the prediction result and the link quality corresponding to the beam indicated by the beam measurement result within the first time period is greater than a second threshold, determining, by the terminal device, that the prediction result of the first model is inaccurate; or
    if the difference between the link quality corresponding to the beam indicated by the prediction result and the link quality corresponding to the beam indicated by the beam measurement result within the first time period is less than or equal to the second threshold, determining, by the terminal device, that the prediction result of the first model is accurate.

6.  The method according to any one of claims 2 to 5, wherein the beam measurement result of the target beam set is determined based on a manner of beam sweeping.

7.  The method according to claim 6, wherein the method further comprises:
    receiving, by the terminal device, first configuration information transmitted by a network device, wherein the first configuration information is used to configure a time-frequency resource used for the beam sweeping, and/or the first configuration information is used to configure a time-frequency resource used to transmit the beam measurement result.

8.  The method according to any one of claims 1 to 7, wherein in the inactive state, beam management is performed on the target beam set based on a manner of beam sweeping.

9. The method according to any one of claims 1 to 8, wherein the first model periodically enters the monitoring state.

10. The method according to any one of claims 1 to 8, wherein the first model aperiodically enters the monitoring state.

11. The method according to claim 10, wherein the method further comprises:

   receiving, by the terminal device, first indication information transmitted by a network device, wherein the first indication information is used to instruct the terminal device to trigger the first model to enter the monitoring state; or autonomously triggering, by the terminal device, the first model to enter the monitoring state.

12. The method according to any one of claims 1 to 11, wherein the method further comprises:

   if the monitoring result indicates that the prediction result of the first model is accurate, determining, by the terminal device, that the first model enters the active state from the monitoring state; and/or if the monitoring result indicates that the prediction result of the first model is inaccurate, determining, by the terminal device, that the first model enters the inactive state from the monitoring state.

13. The method according to any one of claims 1 to 12, wherein the method further comprises:

   if the first model is deployed on the terminal device, transmitting, by the terminal device, the monitoring result of the first model to a network device; or if the first model is deployed on a network device, receiving, by the terminal device, the monitoring result of the first model that is transmitted by the network device.

14. The method according to any one of claims 1 to 13, wherein the method further comprises:

   receiving, by the terminal device, second configuration information transmitted by a network device, wherein the second configuration information is used to configure duration of a first time window, and the first time window indicates a time period within which the first model is in the monitoring state; and/or

the second configuration information is used to configure a quantity of times that the accuracy of the prediction result of the first model is monitored within the first time window.

15. The method according to any one of claims 1 to 14, wherein duration of a first time window within which the monitoring state lasts and/or a quantity of times of monitoring within the first time window are indicated in a manner of pre-configuration, wherein
   the first time window indicates a time period within which the first model is in the monitoring state, and the quantity of times of monitoring is a quantity of times that the accuracy of the prediction result of the first model is monitored within the first time window.

16. The method according to any one of claims 1 to 15, wherein if the first model is deployed on the terminal device, the first model is used to perform beam prediction for the terminal device; or
   if the first model is deployed on a network device, the first model is used to perform beam prediction for some or all of terminal devices in a cell.

17. A beam management method, comprising:

   determining, by a network device, a state of a first model, wherein
   the first model is used to perform beam prediction for a target beam set, and the state of the first model comprises one or more of an active state, an inactive state, or a monitoring state, wherein the monitoring state is used to determine a monitoring result of the first model, and the monitoring result is used to indicate accuracy of a prediction result of the first model.

18. The method according to claim 17, wherein in the monitoring state, the accuracy of the prediction result of the first model is determined based on a beam measurement result of the target beam set.

19. The method according to claim 18, wherein the accuracy of the prediction result of the first model is determined based on one or more of following:

   a quantity of times that a beam indicated by the prediction result does not match a beam indicated by the beam measurement result within a first time period; or
   a difference between link quality corresponding to the beam indicated by the prediction result and link quality corresponding to the beam indicated by the beam measurement result within the first time period.

20. The method according to claim 19, wherein the method further comprises:

if the quantity of times that the beam indicated by the prediction result does not match the beam indicated by the beam measurement result within the first time period is greater than a first threshold, determining, by the network device, that the prediction result of the first model is inaccurate; or

if the quantity of times that the beam indicated by the prediction result does not match the beam indicated by the beam measurement result within the first time period is less than or equal to the first threshold, determining, by a terminal device, that the prediction result of the first model is accurate.

21. The method according to claim 19, wherein the method further comprises:

if the difference between the link quality corresponding to the beam indicated by the prediction result and the link quality corresponding to the beam indicated by the beam measurement result within the first time period is greater than a second threshold, determining, by the network device, that the prediction result of the first model is inaccurate; or

if the difference between the link quality corresponding to the beam indicated by the prediction result and the link quality corresponding to the beam indicated by the beam measurement result within the first time period is less than or equal to the second threshold, determining, by a terminal device, that the prediction result of the first model is accurate.

22. The method according to any one of claims 17 to 21, wherein the beam measurement result of the target beam set is determined based on a manner of beam sweeping.

23. The method according to claim 22, wherein the method further comprises:
transmitting, by the network device, first configuration information to a terminal device, wherein the first configuration information indicates a time-frequency resource used for the beam sweeping, and/or the first configuration information indicates a time-frequency resource used to transmit the beam measurement result.

24. The method according to any one of claims 17 to 23, wherein in the inactive state, beam management is performed on the target beam set based on a manner of beam sweeping.

25. The method according to any one of claims 17 to 24, wherein the first model periodically enters the monitoring state.

26. The method according to any one of claims 17 to 24, wherein the first model aperiodically enters the monitoring state.

27. The method according to claim 26, wherein the method further comprises:

transmitting, by the network device, first indication information to a terminal device, wherein the first indication information is used to instruct the terminal device to trigger the first model to enter the monitoring state; or
autonomously triggering, by the terminal device, the first model to enter the monitoring state.

28. The method according to any one of claims 17 to 27, wherein the method further comprises:

if the monitoring result indicates that the prediction result of the first model is accurate, determining, by the network device, that the first model enters the active state from the monitoring state; and/or
if the monitoring result indicates that the prediction result of the first model is inaccurate, determining, by the network device, that the first model enters the inactive state from the monitoring state.

29. The method according to any one of claims 17 to 28, wherein the method further comprises:

if the first model is deployed on a terminal device, receiving, by the network device, the monitoring result of the first model that is transmitted by the terminal device; or
if the first model is deployed on the network device, transmitting, by the network device, the monitoring result of the first model to a terminal device.

30. The method according to any one of claims 17 to 29, wherein the method further comprises:

transmitting, by the network device, second configuration information to a terminal device, wherein the second configuration information is used to configure duration of a first time window, and the first time window indicates a time period within which the first model is in the monitoring state; and/or
the second configuration information is used to configure a quantity of times that the accuracy of the prediction result of the first model is monitored within the first time window.

31. The method according to any one of claims 17 to 29, wherein duration of a first time window within which the monitoring state lasts and/or a quantity of times of monitoring within the first time window are indicated in a manner of pre-configuration, wherein

the first time window indicates a time period within which the first model is in the monitoring state, and the quantity of times of monitoring is a quantity of times that the accuracy of the prediction result of the first model is monitored within the first time window.

32. The method according to any one of claims 17 to 31, wherein if the first model is deployed on a terminal device, the first model is used to perform beam prediction for the terminal device; or

if the first model is deployed on the network device, the first model is used to perform beam prediction for some or all of terminal devices in a cell.

33. A terminal device, comprising:

a processing unit, configured to determine a state of a first model, wherein

the first model is used to perform beam prediction for a target beam set, and the state of the first model comprises one or more of an active state, an inactive state, or a monitoring state, wherein the monitoring state is used to determine a monitoring result of the first model, and the monitoring result is used to indicate accuracy of a prediction result of the first model.

34. The terminal device according to claim 33, wherein in the monitoring state, the accuracy of the prediction result of the first model is determined based on a beam measurement result of the target beam set.

35. The terminal device according to claim 34, wherein the accuracy of the prediction result of the first model is determined based on one or more of following:

a quantity of times that a beam indicated by the prediction result does not match a beam indicated by the beam measurement result within a first time period; or

a difference between link quality corresponding to the beam indicated by the prediction result and link quality corresponding to the beam indicated by the beam measurement result within the first time period.

36. The terminal device according to claim 35, wherein the processing unit is configured to, if the quantity of times that the beam indicated by the prediction result does not match the beam indicated by the beam measurement result within the first time period is greater than a first threshold, determine that the prediction result of the first model is inaccurate; or

the processing unit is configured to, if the quantity of times that the beam indicated by the prediction result does not match the beam indicated by the beam measurement result within the first time period is less than or equal to the first threshold, determine that the prediction result of the first model is accurate.

37. The terminal device according to claim 35, wherein the processing unit is configured to, if the difference between the link quality corresponding to the beam indicated by the prediction result and the link quality corresponding to the beam indicated by the beam measurement result within the first time period is greater than a second threshold, determine that the prediction result of the first model is inaccurate; or

the processing unit is configured to, if the difference between the link quality corresponding to the beam indicated by the prediction result and the link quality corresponding to the beam indicated by the beam measurement result within the first time period is less than or equal to the second threshold, determine that the prediction result of the first model is accurate.

38. The terminal device according to any one of claims 33 to 37, wherein the beam measurement result of the target beam set is determined based on a manner of beam sweeping.

39. The terminal device according to claim 38, wherein the terminal device further comprises:

a first receiving unit, configured to receive first configuration information transmitted by a network device, wherein the first configuration information is used to configure a time-frequency resource used for the beam sweeping, and/or the first configuration information is used to configure a time-frequency resource used to transmit the beam measurement result.

40. The terminal device according to any one of claims 33 to 39, wherein in the inactive state, beam management is performed on the target beam set based on a manner of beam sweeping.

41. The terminal device according to any one of claims 33 to 40, wherein the first model periodically enters the monitoring state.

42. The terminal device according to any one of claims 33 to 40, wherein the first model aperiodically enters the monitoring state.

43. The terminal device according to claim 42, wherein the terminal device further comprises:

a second receiving unit, configured to receive first indication information transmitted by a network device, wherein the first indication information is used to instruct the terminal device to trigger the first model to enter the monitoring state; or

wherein the terminal device is configured to autonomously trigger the first model to enter the monitoring state.

44. The terminal device according to any one of claims 33 to 43, wherein the processing unit is further configured to:

if the monitoring result indicates that the prediction result of the first model is accurate, determine that the first model enters the active state from the monitoring state; and/or
if the monitoring result indicates that the prediction result of the first model is inaccurate, determine that the first model enters the inactive state from the monitoring state.

45. The terminal device according to any one of claims 33 to 44, wherein a transmitting unit is configured to: if the first model is deployed on the terminal device, transmit the monitoring result of the first model to a network device; or
a third receiving unit is configured to: if the first model is deployed on a network device, receive the monitoring result of the first model that is transmitted by the network device.

46. The terminal device according to any one of claims 33 to 45, wherein the terminal device further comprises:

a fourth receiving unit, configured to receive second configuration information transmitted by a network device, wherein the second configuration information is used to configure duration of a first time window, and the first time window indicates a time period within which the first model is in the monitoring state; and/or
the second configuration information is used to configure a quantity of times that the accuracy of the prediction result of the first model is monitored within the first time window.

47. The terminal device according to any one of claims 33 to 46, wherein duration of a first time window within which the monitoring state lasts and/or a quantity of times of monitoring within the first time window are indicated in a manner of pre-configuration, wherein
the first time window indicates a time period within which the first model is in the monitoring state, and the quantity of times of monitoring is a quantity of times that the accuracy of the prediction result of the first model is monitored within the first time window.

48. The terminal device according to any one of claims 33 to 47, wherein if the first model is deployed on the terminal device, the first model is used to perform beam prediction for the terminal device; or
if the first model is deployed on a network device, the first model is used to perform beam prediction for some or all of terminal devices in a cell.

49. A network device, comprising:

a processing unit, configured to determine a state of a first model, wherein
the first model is used to perform beam prediction for a target beam set, and the state of the first model comprises one or more of an active state, an inactive state, or a monitoring state, wherein the monitoring state is used to determine a monitoring result of the first model, and the monitoring result is used to indicate accuracy of a prediction result of the first model.

50. The network device according to claim 49, wherein in the monitoring state, the accuracy of the prediction result of the first model is determined based on a beam measurement result of the target beam set.

51. The network device according to claim 50, wherein the accuracy of the prediction result of the first model is determined based on one or more of following:

a quantity of times that a beam indicated by the prediction result does not match a beam indicated by the beam measurement result within a first time period; or
a difference between link quality corresponding to the beam indicated by the prediction result and link quality corresponding to the beam indicated by the beam measurement result within the first time period.

52. The network device according to claim 51, wherein the processing unit is configured to, if the quantity of times that the beam indicated by the prediction result does not match the beam indicated by the beam measurement result within the first time period is greater than a first threshold, determine that the prediction result of the first model is inaccurate; or
the processing unit is configured to, if the quantity of times that the beam indicated by the prediction result does not match the beam indicated by the beam measurement result within the first time period is less than or equal to the first threshold, determine that the prediction result of the first model is accurate.

53. The network device according to claim 51, wherein the processing unit is configured to, if the difference between the link quality corresponding to the beam indicated by the prediction result and the link quality corresponding to the beam indicated by the beam measurement result within the first time period is greater than a second threshold, determine that the prediction result of the first model is inaccurate; or

the processing unit is configured to, if the difference between the link quality corresponding to the beam indicated by the prediction result and the link quality corresponding to the beam indicated by the beam measurement result within the first time period is less than or equal to the second threshold, determine that the prediction result of the first model is accurate.

54. The network device according to any one of claims 49 to 53, wherein the beam measurement result of the target beam set is determined based on a manner of beam sweeping.

55. The network device according to claim 54, wherein the network device further comprises:
a first transmitting unit, configured to transmit first configuration information to a terminal device, wherein the first configuration information indicates a time-frequency resource used for the beam sweeping, and/or the first configuration information indicates a time-frequency resource used to transmit the beam measurement result.

56. The network device according to any one of claims 49 to 55, wherein in the inactive state, beam management is performed on the target beam set based on a manner of beam sweeping.

57. The network device according to any one of claims 49 to 56, wherein the first model periodically enters the monitoring state.

58. The network device according to any one of claims 49 to 57, wherein the first model aperiodically enters the monitoring state.

59. The network device according to claim 58, wherein the network device further comprises:

a second transmitting unit, configured to transmit first indication information to a terminal device, wherein the first indication information is used to instruct the terminal device to trigger the first model to enter the monitoring state; or wherein the terminal device autonomously triggers the first model to enter the monitoring state.

60. The network device according to any one of claims 49 to 59, wherein the processing unit is further configured to:

if the monitoring result indicates that the prediction result of the first model is accurate, determine that the first model enters the active state from the monitoring state; and/or
if the monitoring result indicates that the prediction result of the first model is inaccurate, determine that the first model enters the inactive state from the monitoring state.

61. The network device according to any one of claims 49 to 60, comprising:

a first receiving unit configured to: if the first model is deployed on a terminal device, receive the monitoring result of the first model that is transmitted by the terminal device; or
a third transmitting unit configured to: if the first model is deployed on the network device, transmit the monitoring result of the first model to a terminal device.

62. The network device according to any one of claims 49 to 61, wherein the network device further comprises:

a fourth transmitting unit, configured to transmit second configuration information to a terminal device, wherein the second configuration information is used to configure duration of a first time window, and the first time window indicates a time period within which the first model is in the monitoring state; and/or
the second configuration information is used to configure a quantity of times that the accuracy of the prediction result of the first model is monitored within the first time window.

63. The network device according to any one of claims 49 to 62, wherein duration of a first time window within which the monitoring state lasts and/or a quantity of times of monitoring within the first time window are indicated in a manner of pre-configuration, wherein
the first time window indicates a time period within which the first model is in the monitoring state, and the quantity of times of monitoring is a quantity of times that the accuracy of the prediction result of the first model is monitored within the first time window.

64. The network device according to any one of claims 49 to 63, wherein if the first model is deployed on a terminal device, the first model is used to perform beam prediction for the terminal device; or
if the first model is deployed on the network device, the first model is used to perform beam prediction for some or all of terminal devices in a cell.

65. A terminal device, comprising a transceiver, a memory, and a processor, wherein the memory is configured to store a program, and the processor is configured to invoke the program in the memory and control the transceiver to receive or transmit a signal, to cause the terminal to execute the method according to any one of claims 1 to 16.

66. A network device, comprising a transceiver, a memory, and a processor, wherein the memory is configured to store a program, and the processor is configured to invoke the program in the memory and control the transceiver to receive or transmit a signal, to cause the network device to execute the method according to any one of claims 16 to 32.

67. An apparatus, comprising a processor configured to invoke a program from a memory, to cause the apparatus to execute a method according to any one of claims 1 to 32.

68. A chip, comprising a processor configured to invoke a program from a memory, to cause a device on which the chip is installed to execute a method according to any one of claims 1 to 32.

69. A computer-readable storage medium, wherein the computer-readable storage medium stores a program, and the program causes a computer to execute a method according to any one of claims 1 to 32.

70. A computer program product, comprising a program, wherein the program causes a computer to execute a method according to any one of claims 1 to 32.

71. A computer program, wherein the computer program causes a computer to execute a method according to any one of claims 1 to 32.

100

110

120

120

FIG. 1

210

211

215

212

213

214

FIG. 2

310

311

314

Instant 1    312    313    Instant 4
Instant 2    Instant 3

321

325

322    323

324

FIG. 3

P1 procedure

Transmit beam 0
Transmit beam 1
Transmit beam 2
Transmit beam 3

Receive beam A
Receive beam B
Receive beam C
Receive beam D

Network device    Terminal device

FIG. 4

P2 procedure

FIG. 5

P3 procedure

FIG. 6

FIG. 7

Input layer 810          Hidden layer 820          Output layer 830

FIG. 8

Input layer
910

Convolutional
layer 920

Pooling
layer 930

Convolutional
layer 920

Pooling
layer 930

Full
connection
layer 940

Output layer
950

FIG. 9

Output layer

Hidden layer

Input layer

FIG. 10

→ Representing vector transmission

○ Representing a processing node

σ Representing a neural network layer

Representing a vector connection

Representing vector replication

1130

$h_t$

$c_{t-1}$

1110

1120

tanh

σ

σ    tanh

σ

$c_t$

FIG. 11

A terminal device determines a
state of an AI model          S1210

FIG. 12

| S1310: An AI model is in an active state in T time units | S1320: The AI model is in a monitoring state in W time units |
|---|---|

S1330: If accuracy is relatively high

S1330: : If accuracy is relatively low

| S1340: The AI model is in the active state in T time units | S1360: The AI model is in the monitoring state in W time units |
|---|---|

| S1350: The AI model is in an inactive state in T time units | S1360: The AI model is in the monitoring state in W time units |
|---|---|

FIG. 13

FIG. 14

Network device | Terminal device 2 | Terminal device 1

S1530: First configuration information | S1530: First configuration information

S1510: Active state

S1540: Monitor a prediction result

S1520: Monitoring state

S1560: Indication information 2 | S1550: Indication information 1

S1570: Indication information 3

S1580: Beam measurement process based on a beam sweeping process | Inactive state | Active state

FIG. 15

Network device | Terminal device 2 | Terminal device 1

S1610: Active state

S1620: First configuration information | S1620: First configuration information

S1630: Monitoring state | S1640: Monitor a prediction result

S1660: Indication information 2 | S1650: Indication information 1

S1670: Indication information 3

S1680: Beam measurement process based on a beam sweeping process | Inactive state | Active state

FIG. 16

S1710: Inactive state

S1720: Request 1

S1730: First configuration information

Monitoring state

S1740: Monitor a prediction result

S1750 to S1760: Indication information 1
or indication information 2

Active state or
inactive state

FIG. 17

S1810: Active state

S1820: First
configuration information

S1820: First
configuration information

S1830: Monitoring state

S1840: Monitor a prediction result

S1860: Indication
information 2

S1850: Indication
information 1

S1870: Indication
information 3

S1880: Beam
measurement process
based on a beam
sweeping process

Inactive state

Active state

FIG. 18

Network device

Terminal device

S1910: Inactive state

S1920: Request 1

S1930: First configuration information

Monitoring state

⋮    S1940: Monitor a prediction result

S1950 to S1960: Indication information 1 or indication information 2

Active state or inactive state

FIG. 19

Terminal device 2000

Processing unit 2010

FIG. 20

Network device 2100

Processing unit 2110

FIG. 21

Apparatus 2200

Processor 2210

Memory 2220

Transceiver 2230

FIG. 22

## INTERNATIONAL SEARCH REPORT

| International application No. |
|---|
| **PCT/CN2022/123512** |

**A.    CLASSIFICATION OF SUBJECT MATTER**

H04W 16/28(2009.01)i;  H04W 72/02(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXTC, ENTXT, VCN, VEN, 3GPP: 人工智能/AI, 模型, 波束, 检测/监测/验证, 预测/选择/推荐, 准确, 激活/连接, 状态, artificial intelligence, model, beam, monitor, forecast/select/recommend, accurate/correct, activation/connect, state

**C.    DOCUMENTS CONSIDERED TO BE RELEVANT**

| Category* | Citation of document, with indication, where appropriate, of the relevant passages | Relevant to claim No. |
|---|---|---|
| X | US 2020186227 A1 (TELEFONAKTIEBOLAGET LM ERICSSON) 11 June 2020 (2020-06-11) description, paragraphs [0048]-[0104] | 1-71 |
| A | CN 114938712 A (BEIJING XIAOMI MOBILE SOFTWARE CO., LTD.) 23 August 2022 (2022-08-23) entire document | 1-71 |
| A | CN 114531698 A (VIVO MOBILE COMMUNICATION CO., LTD.) 24 May 2022 (2022-05-24) entire document | 1-71 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2022** | **20 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/123512**

| Patent document cited in search report | | | Publication date (day/month/year) | Patent family member(s) | | | Publication date (day/month/year) |
|---|---|---|---|---|---|---|---|
| US | 2020186227 | A1 | 11 June 2020 | EP | 3665787 | A1 | 17 June 2020 |
| | | | | WO | 2019029802 | A1 | 14 February 2019 |
| CN | 114938712 | A | 23 August 2022 | None | | | |
| CN | 114531698 | A | 24 May 2022 | None | | | |

Form PCT/ISA/210 (patent family annex) (January 2015)